(19) Europäisches Patentamt
European Patent Office
Office européen des brevets

(11) **EP 4 730 855 A1**

(12) **EUROPEAN PATENT APPLICATION**
published in accordance with Art. 153(4) EPC

(43) Date of publication:
**22.04.2026 Bulletin 2026/17**

(21) Application number: **23946084.3**

(22) Date of filing: **21.07.2023**

(51) International Patent Classification (IPC):
**H04W 24/02** (2009.01)

(52) Cooperative Patent Classification (CPC):
**H04W 24/02**

(86) International application number:
**PCT/CN2023/108666**

(87) International publication number:
**WO 2025/019990 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **WANG, Jian
  Shenzhen, Guangdong 518129 (CN)**
• **QIAO, Yunfei
  Shenzhen, Guangdong 518129 (CN)**
• **ZHANG, Gongzheng
  Shenzhen, Guangdong 518129 (CN)**
• **LI, Rong
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND RELATED DEVICE**

(57)    This application provides a communication method and a related device, to enable a computing capability of a communication node to be applied to an AI task in a learning system, and improve implementation flexibility of different AI systems of a same learning system. In the method, a first node determines first information and second information, where the first information indicates AI configuration information of a first AI system, the second information indicates AI configuration information of a second AI system, the first AI system and the second AI system belong to a same learning system, the first AI system and the second AI system include at least one same node, and a learning architecture of the first AI system is different from a learning architecture of the second AI system; and the first node sends the first information and the second information.

FIG. 4

**Description**

## TECHNICAL FIELD

This application relates to the communication field, and in particular, to a communication method and a related device.

## BACKGROUND

Wireless communication may be transmission communication performed between two or more communication nodes without propagation through conductors or cables. The communication nodes usually include a network device and a terminal device.

Currently, in a wireless communication system, a communication node usually has signal sending and receiving capabilities and a computing capability. A network device having a computing capability is used as an example. The computing capability of the network device is mainly to provide computing capability support for signal sending and receiving capabilities (for example, compute a time domain resource, a frequency domain resource, and the like that carry a signal), to implement communication between the network device and another communication node.

However, in a communication network, in addition to providing the computing capability support for the foregoing communication task, the communication node may further have a redundant computing capability. Therefore, how to use the computing capabilities is a technical problem to be urgently resolved.

## SUMMARY

This application provides a communication method and a related device, to enable a computing capability of a communication node to be applied to an artificial intelligence (artificial intelligence, AI) task in a learning system, and improve implementation flexibility of different AI systems of a same learning system.

A first aspect of this application provides a communication method. The method is performed by a first node, the method is performed by a part of components (for example, a processor, a chip, or a chip system) in the first node, or the method may be implemented by using a logical module or software that can implement all or a part of functions of the first node. In the first aspect and possible implementations of the first aspect, an example in which the method is performed by the first node is used for description. In the method, the first node determines first information and second information, where the first information indicates AI configuration information of a first AI system, the second information indicates AI configuration information of a second AI system, the first AI system and the second AI system belong to a same learning system, the first AI system and the second AI system include at least one same node, and a learning architecture of the first AI system is different from a learning architecture of the second AI system; and the first node sends the first information and the second information.

Based on the foregoing technical solution, the first information and the second information that are sent by the first node respectively indicate the AI configuration information of the first AI system and the AI configuration information of the second AI system, where the first AI system and the second AI system include the at least one same node, and the learning architecture of the first AI system is different from the learning architecture of the second AI system. In other words, in the same learning system in which the first AI system and the second AI system are located, the at least one same node may perform an AI task in the first AI system based on one learning architecture, and the at least one same node may also perform an AI task in the second AI system based on the other learning architecture. In comparison with an implementation in which different AI systems of a same learning system perform AI tasks based on a same learning architecture, in the foregoing technical solution, different AI systems of the same learning system may perform AI tasks based on different learning architectures. Therefore, when a communication node in a communication system serves as a node that participates in the learning system, a computing capability of the communication node can be applied to the AI task in the learning system, and implementation flexibility of the different AI systems of the same learning system can be improved.

In addition, different learning architectures usually have different performance and complexities, and capabilities (for example, computing capabilities and storage capabilities) and requirements of the node that participates in the learning system may also be different. Therefore, in the foregoing technical solution, the different AI systems of the same learning system may perform the AI tasks based on the different learning architectures, so that more learning architectures can be provided, and the requirements and the capabilities of the nodes that participate in the learning system can be better matched.

In addition, different learning architectures usually have different performance gains, and only a performance gain of one learning architecture can be obtained based on the same learning architecture. If an AI task is complex and performance gains of a plurality of learning architectures need to be obtained, in an implementation in which different AI systems of a same learning system perform AI tasks based on a same learning architecture, learning processes of the plurality of learning architectures need to be performed in sequence, and complexity is high. However, in the foregoing technical solution, the different AI systems of the same learning system may separately perform the AI tasks based on the different learning architectures, so that the learning system can obtain performance gains generated by the plurality of learning architectures, to simplify implementation complexity.

It should be understood that, that the first information indicates the AI configuration information of the first AI system may be understood as follows: The first information includes an index of the AI configuration information of the first AI system, so that a receiver of the first information can obtain the AI configuration information of the first AI system based on the index; or the first information includes the AI configuration information of the first AI system, so that a receiver of the first information can obtain the AI configuration information of the first AI system from the first information. Similarly, that the second information indicates the AI configuration information of the second AI system may be understood as follows: The second information includes an index of the AI configuration information of the second AI system, so that a receiver of the second information can obtain the AI configuration information of the second AI system based on the index; or the second information includes the AI configuration information of the second AI system, so that a receiver of the second information can obtain the AI configuration information of the second AI system from the second information.

In this application, the learning system may be understood as a system in which one or more nodes learn data in an AI manner. The learning system may be replaced with an AI learning system, a machine learning system, or the like. That the first AI system and the second AI system belong to the same learning system may be understood as that the first AI system includes some nodes in the same learning system, and the second AI system also includes some nodes in the same learning system. The same learning system may include at least two AI systems, for example, the first AI system and the second AI system. Each AI system includes one or more nodes, and the first AI system and the second AI system include the at least one same node. Optionally, the at least one same node may be a control node of the first AI system (or the second AI system), or may not be a control node of the first AI system (or the second AI system). This is not limited herein.

Optionally, in the same learning system, the first AI system and the second AI system are configured to perform a same AI task, or the first AI system and the second AI system are configured to perform different subtasks of a same AI task.

In an implementation example, an example in which the first AI system and the second AI system are configured to perform a same AI task is used. For example, an AI task performed by the same learning system may be an autonomous driving model training task, in other words, each of the first AI system and the second AI system is configured to perform an autonomous driving task. After obtaining model training results corresponding to the autonomous driving task, different AI systems may aggregate the model training results through interaction. For example, the first AI system and the second AI system may separately send locally obtained model training results to each other, so that the two parties can further aggregate the locally obtained model training result and the model training result of the other party, to obtain an aggregated result. For another example, both the first AI system and the second AI system may send locally obtained model training results to a control node of the learning system, so that the control node can aggregate the model training results of the two parties to obtain an aggregated result, and then separately send the aggregated result to the first AI system and the second AI system.

In another implementation example, an example in which the first AI system and the second AI system are configured to perform different subtasks of a same AI task is used. For example, the AI task performed by the same learning system may still be the autonomous driving model training task. Usually, image recognition is a necessary part required by the autonomous driving task. For example, an image recognition task like a human body image recognition task, a vehicle license plate image recognition task, or an obstacle image recognition task may be a subtask of the autonomous driving task. Therefore, the subtask performed by the first AI system and the subtask performed by the second AI subsystem may be two different tasks of the human body image recognition task, the vehicle license plate image recognition task, and the obstacle image recognition task. Similarly, the first AI system and the second AI system may also implement a model aggregation process in a manner of interacting with each other or in a manner of interacting with a control node of the learning system.

Optionally, the first AI system and the second AI system include a completely same node. In this case, if the first AI system and the second AI system perform different subtasks of a same AI task, a set of same nodes used to perform a subtask may also be considered as the first AI system, and a set of same nodes used to perform the other subtask may be considered as the second AI system.

Optionally, the first AI system includes the node in the second AI system, and further includes another node. In this case, the second AI system may be referred to as a subsystem of the first AI system, a lower-level system of the first AI system, a subset of the first AI system, or the like. Alternatively, the second AI system includes the node in the first AI system, and further includes another node. In this case, the first AI system may be referred to as a subsystem of the second AI system, a lower-level system of the second AI system, a subset of the second AI system, or the like.

It should be understood that the first node is located in the learning system in which the first AI system and the second AI system are located, and the first node is configured to determine and deliver AI configuration information of AI systems included in the learning system. The first node may be a control device, a control node, a scheduling node, a scheduling device, a management and control device, a management and control node, or the like of the learning system. The learning system may include only the first AI system and the second AI system, and the learning system may further include another AI system different from the first AI system and the second AI system. This is not limited herein. In addition, each AI system (for example, the first AI system or the second AI system) may include one or more communication nodes, and the one or more communication nodes include a network device and/or a terminal device.

Optionally, the first node may be a device in a communication system, in other words, a node in the learning system may be a communication node. For example, the first node may be a network device or a terminal device. When the first node is a network device, the first node may be an access network device, for example, a base station or a macro base station. Alternatively, the first node may be a core network device, for example, a network data analytics function (network data analytics function, NWDAF) network element.

In a possible implementation of the first aspect, the second AI system belongs to the first AI system; and that the first node sends the first information and the second information includes: The first node sends the first information and the second information to a control node of the first AI system.

Based on the foregoing technical solution, in the learning system, the second AI system belongs to the first AI system, in other words, the first AI system includes the node in the second AI system, and may further include another node. Therefore, the first node may send the first information and the second information to the control node of the first AI system, so that the control node of the first AI system can perform the AI task based on the AI configuration information that is of the first AI system and that is indicated by the first information. In addition, the second AI system serves as a lower-level system of the first AI system, and the control node of the first AI system may send, to the control node of the second AI system, a part or all of the AI configuration information that is of the second AI system and that is indicated by the second information. In a level-by-level indication manner, the control node of the second AI system can perform the AI task based on the part or all of the AI configuration information.

In a possible implementation of the first aspect, that the first node sends the first information and the second information includes: The first node sends the first information to a control node of the first AI system; and the first node sends the second information to a control node of the second AI system.

Based on the foregoing technical solution, in the learning system, the first node may separately send the first information and the second information to the control node of the first AI system and the control node of the second AI system, so that the control node of the first AI system and the control node of the second AI system can perform the AI tasks based on the received information in a centralized indication manner.

Optionally, in the foregoing implementation, a relationship between the first AI system and the second AI system is not limited. For example, the first AI system may belong to the second AI system, the second AI system may belong to the first AI system, or the first AI system and the second AI system each include another node in addition to the at least one same node.

In a possible implementation of the first aspect,

the AI configuration information of the first AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system; and/or
the AI configuration information of the second AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

It should be understood that, in a process in which the node performs the AI task based on the AI configuration information (for example, the first node performs the AI task based on the AI configuration information of the first AI system, or the second node performs the AI task based on the AI configuration information of the second AI system), the node may perform the AI task based on at least one of the foregoing indication information.

For example, when the AI configuration information includes the first indication information, the node may determine, based on the first indication information, the node that participates in the AI task, and the node that subsequently participates in the AI task may provide local data/a local computing capability for execution of the AI task.

For another example, when the AI configuration information includes the second indication information, the node may determine, based on the second indication information, the role of the node that participates in the AI task, and subsequently, the node may schedule corresponding local data/a corresponding local computing capability of each node based on a role of each node.

For another example, when the AI configuration information includes the third indication information, the node may determine the learning architecture of the AI system based on the third indication information, and subsequently, the node may schedule each node of the AI system to perform a corresponding AI task based on the learning architecture.

For another example, when the AI configuration information includes the fourth indication information, the node may determine the AI task of the AI system based on the fourth indication information, and subsequently, the node may schedule each node of the AI system to perform the AI task.

For another example, when the AI configuration information includes the fifth indication information, the node may determine the communication resource of the AI system based on the fifth indication information, and subsequently, the node may transmit, based on the communication resource of the AI system, exchanged data related to an AI task.

Based on the foregoing technical solution, the AI configuration information that is of the first AI system and that is indicated by the first information or the AI configuration information that is of the second AI system and that is indicated by the second information may include at least one of the foregoing indication information, so that the first AI system or the second AI system can perform the AI task based on at least one of the foregoing indication information, to improve solution implementation flexibility.

In a possible implementation of the first aspect, the learning architecture includes federated learning, federated distillation, decentralized learning, meta learning, or split learning.

Based on the foregoing technical solution, the learning architecture of the first AI system and the learning architecture of the second AI system may include any one of the foregoing implementations, to improve solution implementation flexibility.

In a possible implementation of the first aspect, the first AI system or the second AI system is configured to: perform first processing on first data to obtain second data, and perform second processing on the second data.

When the learning architecture includes federated learning (or when the learning architecture is federated learning), the first data includes a parameter and/or a gradient of a global model, the first processing includes local training processing, the second data includes a parameter and/or a gradient of a local model, and the second processing includes aggregation processing. It may be understood that when the learning architecture is federated learning, the second processing may include aggregation processing on the local model parameter, and/or the second processing may include aggregation processing on the local model gradient.

When the learning architecture includes federated distillation (or when the learning architecture is federated distillation), the first data includes global logits (logits), the first processing includes local training processing, the second data includes local logits, and the second processing includes aggregation processing. It may be understood that when the learning architecture is federated distillation, the second processing may include aggregation processing on the local logits.

When the learning architecture includes decentralized learning (or when the learning architecture is decentralized learning), the first data includes a parameter and/or a gradient of a first local model, the first processing includes aggregation processing and local training processing, the second data includes a parameter and/or a gradient of a second local model, and the second processing includes aggregation processing and local training processing.

When the learning architecture includes meta learning (or when the learning architecture is meta learning), the first data includes a parameter and/or a gradient of a meta model, the first processing includes support set training processing and test set gradient computation processing, the second data includes a test set gradient and/or loss, and the second processing includes gradient aggregation processing and meta model update processing.

When the learning architecture includes split learning (or when the learning architecture is split learning), the first data includes a split layer inference result, the first processing includes inference, gradient computation, reverse transfer, and parameter update processing, the second data includes a split layer gradient, and the second processing includes continuing gradient transfer processing and parameter update processing.

Based on the foregoing technical solution, in different learning architectures, after performing the first processing on the first data to obtain the second data, the first AI system or the second AI system may perform the second processing on the second data. In addition, in the foregoing implementation, specific implementation processes of the first data, the second data, the first processing, and the second processing in different learning architectures are provided.

A second aspect of this application provides a communication method. The method is performed by a second node, the method is performed by a part of components (for example, a processor, a chip, or a chip system) in the second node, or the method may be implemented by using a logical module or software that can implement all or a part of functions of the second node. In the second aspect and possible implementations of the second aspect, an example in which the method is performed by the second node is used for description. In the method, the second node receives first information, where the first information indicates AI configuration information of a first AI system, the first AI system and a second AI system belong to a same distributed learning system, the first AI system and the second AI system include at least one same node, and a learning architecture of the first AI system is different from a learning architecture of the second AI system; and the second node performs an AI task based on the AI configuration information of the first AI system.

Based on the foregoing technical solution, in the learning system including the first AI system and the second AI system, the first information received by the second node located in the first AI system indicates the AI configuration information of the first AI system, and subsequently, the second node performs the AI task based on the AI configuration information of the first AI system. The first AI system and the second AI system include the at least one same node, and the learning architecture of the first AI system is different from the learning architecture of the second AI system. In other words, in the same learning system in which the first AI system and the second AI system are located, the at least one same node may perform an AI task in the first AI system based on one learning architecture, and the at least one same node may also perform an AI task in the second AI system based on the other learning architecture. In comparison with an implementation in which different AI systems of a same learning system perform AI tasks based on a same learning architecture, in the foregoing technical solution, different AI systems of the same learning system may perform AI tasks based on different learning architectures. Therefore, when a communication node in a communication system serves as a node that participates in the learning system, a computing capability of the communication node can be applied to the AI task in the learning system, and implementation flexibility of the different AI systems of the same learning system can be improved.

In addition, different learning architectures usually have different performance and complexities, and capabilities (for example, computing capabilities and storage capabilities) and requirements of the node that participates in the learning system may also be different. Therefore, in the foregoing technical solution, the different AI systems of the same learning system may perform the AI tasks based on the different learning architectures, so that more learning architectures can be provided, and the requirements and the capabilities of the nodes that participate in the learning system can be better matched.

In addition, different learning architectures usually have different performance gains, and only a performance gain of one learning architecture can be obtained based on the same learning architecture. If an AI task is complex and performance gains of a plurality of learning architectures need to be obtained, in an implementation in which different AI systems of a same learning system perform AI tasks based on a same learning architecture, learning processes of the plurality of learning architectures need to be performed in sequence, and complexity is high. However, in the foregoing technical solution, the different AI systems of the same learning system may separately perform the AI tasks based on the different learning architectures, so that the learning system can obtain performance gains generated by the plurality of learning architectures, to simplify implementation complexity.

In this application, the learning system may be understood as a system in which one or more nodes learn data in an AI manner. The learning system may be replaced with an AI learning system, a machine learning system, or the like. That the first AI system and the second AI system belong to the same learning system may be understood as that the first AI system includes some nodes in the same learning system, and the second AI system also includes some nodes in the same learning system. The same learning system may include at least two AI systems, for example, the first AI system and the second AI system. Each AI system includes one or more nodes, and the first AI system and the second AI system include the at least one same node.

Optionally, the first AI system and the second AI system include a completely same node.

Optionally, the first AI system includes the node in the second AI system, and further includes another node. In this case, the second AI system may be referred to as a subsystem of the first AI system, a lower-level system of the first AI system, a subset of the first AI system, or the like. Alternatively, the second AI system includes the node in the first AI system, and further includes another node. In this case, the first AI system may be referred to as a subsystem of the second AI system, a lower-level system of the second AI system, a subset of the second AI system, or the like.

Optionally, in the same learning system, the first AI system and the second AI system are configured to perform a same AI task, or the first AI system and the second AI system are configured to perform different subtasks of a same AI task.

It should be understood that the second node is located in the first AI system, and the second node is configured to receive the AI configuration information of the first AI system, and control, based on the AI configuration information of the first AI system, the node in the first AI system to perform the AI task. The second node may be a control device, a control node, a scheduling node, a scheduling device, a management and control device, a management and control node, or the like of the first AI system. In addition, the first AI system may include one or more communication nodes (the second node is one of the communication nodes), and the communication node includes a network device and/or a terminal device.

For example, the second node is the control node of the first AI system. That the second node performs the AI task based on the AI configuration information of the first AI system may be understood as that the second node schedules/controls/indicates, based on the AI configuration information of the first AI system, a part or all of nodes in the first AI system to perform the AI task.

Optionally, the second node may be a device in a communication system, in other words, the node in the first AI system may be a communication node. For example, the second node may be a network device or a terminal device. When the second node is a network device, the second node may be a base station, a macro base station, or the like.

In a possible implementation of the second aspect, the second AI system belongs to the first AI system; and the method further includes: The second node receives second information, where the second information indicates AI configuration information of the second AI system; and the second node sends a part or all of the AI configuration information of the second AI system to a control node of the second AI system.

Based on the foregoing technical solution, in the learning system, the second AI system belongs to the first AI system, in other words, the first AI system includes the node in the second AI system, and may further include another node. Therefore, the second node serves as the control node of the first AI system, and the second node may receive the second information, so that the second node can send, to the control node of the second AI system, the part or all of the AI configuration information that is of the second AI system and that is indicated by the second information. In a level-by-level indication manner, the control node of the second AI system can perform the AI task based on the part or all of the AI configuration information.

In a possible implementation of the second aspect, the AI configuration information of the first AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system; and/or
the AI configuration information of the second AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

Based on the foregoing technical solution, the AI configuration information that is of the first AI system and that is indicated by the first information (the AI configuration information that is of the second AI system and that is indicated by the second information) may include at least one of the foregoing indication information, so that the first AI system or the second AI system can perform the AI task based on at least one of the foregoing indication information, to improve solution implementation flexibility.

In a possible implementation of the second aspect, the learning architecture includes federated learning, federated distillation, decentralized learning, meta learning, or split learning.

Based on the foregoing technical solution, the learning architecture of the first AI system and the learning architecture of the second AI system may include any one of the foregoing implementations, to improve solution implementation flexibility.

In a possible implementation of the second aspect, the first AI system or the second AI system is configured to: perform first processing on first data to obtain second data, and perform second processing on the second data.

When the learning architecture includes federated learning (or when the learning architecture is federated learning), the first data includes a parameter and/or a gradient of a global model, the first processing includes local training processing, the second data includes a parameter and/or a gradient of a local model, and the second processing includes aggregation processing. It may be understood that when the learning architecture is federated learning, the second processing may include aggregation processing on the local model parameter, and/or the second processing may include aggregation processing on the local model gradient.

When the learning architecture includes federated distillation (or when the learning architecture is federated distillation), the first data includes global logits, the first processing includes local training processing, the second data includes local logits, and the second processing includes aggregation processing. It may be understood that when the learning architecture is federated distillation, the second processing may include aggregation processing on the local logits.

When the learning architecture includes decentralized learning (or when the learning architecture is decentralized learning), the first data includes a parameter and/or a gradient of a first local model, the first processing includes aggregation processing and local training processing, the second data includes a parameter and/or a gradient of a second local model, and the second processing includes aggregation processing and local training processing.

When the learning architecture includes meta learning (or when the learning architecture is meta learning), the first data includes a parameter and/or a gradient of a meta model, the first processing includes support set training processing and test set gradient computation processing, the second data includes a test set gradient and/or loss, and the second processing includes gradient aggregation processing and meta model update processing.

When the learning architecture includes split learning (or when the learning architecture is split learning), the first data includes a split layer inference result, the first processing includes inference, gradient computation, reverse transfer, and parameter update processing, the second data includes a split layer gradient, and the second processing includes continuing gradient transfer processing and parameter update processing.

Based on the foregoing technical solution, in different learning architectures, after performing the first processing on the first data to obtain the second data, the first AI system or the second AI system may perform the second processing on the second data. In addition, in the foregoing implementation, specific implementation processes of the first data, the second data, the first processing, and the second processing in different learning architectures are provided.

A third aspect of this application provides a communication apparatus. The apparatus is a first node, the apparatus is a part of components (for example, a processor, a chip, or a chip system) in the first node, or the apparatus may be a logical module or software that can implement all or a part of functions of the first node. In the third aspect and possible implementations of the ninth aspect, an example in which the communication apparatus is the first node is used for description. The first node may be a terminal device or a network device.

The apparatus includes a processing unit and a transceiver unit. The processing unit is configured to determine first information and second information, where the first information indicates AI configuration information of a first artificial intelligence AI system, the second information indicates AI configuration information of a second AI system, the first AI system and the second AI system belong to a same learning system, the first AI system and the second AI system include at least one same node, and a learning architecture of the first AI system is different from a learning architecture of the second AI system. The transceiver unit is configured to send the first information and the second information.

In a possible implementation of the third aspect, the second AI system belongs to the first AI system, and that the transceiver unit is configured to send the first information and the second information includes: The transceiver unit is configured to send the first information and the second information to a control node of the first AI system.

In a possible implementation of the third aspect, that the transceiver unit is configured to send the first information and the second information includes: The transceiver unit is configured to send the first information to a control node of the first AI system; and the transceiver unit is configured to send the second information to a control node of the second AI system.

In a possible implementation of the third aspect, the AI configuration information of the first AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system; and/or
the AI configuration information of the second AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

In a possible implementation of the third aspect, the learning architecture includes federated learning, federated distillation, decentralized learning, meta learning, or split learning.

In a possible implementation of the third aspect, the first AI system or the second AI system is configured to: perform first processing on first data to obtain second data, and perform second processing on the second data.

When the learning architecture includes federated learning (or when the learning architecture is federated learning), the first data includes a parameter and/or a gradient of a global model, the first processing includes local training processing, the second data includes a parameter and/or a gradient of a local model, and the second processing includes aggregation processing.

When the learning architecture includes federated distillation (or when the learning architecture is federated distillation), the first data includes global logits, the first processing includes local training processing, the second data includes local logits, and the second processing includes aggregation processing.

When the learning architecture includes decentralized learning (or when the learning architecture is decentralized learning), the first data includes a parameter and/or a gradient of a first local model, the first processing includes aggregation processing and local training processing, the second data includes a parameter and/or a gradient of a second local model, and the second processing includes aggregation processing and local training processing.

When the learning architecture includes meta learning (or when the learning architecture is meta learning), the first data includes a parameter and/or a gradient of a meta model, the first processing includes support set training processing and test set gradient computation processing, the second data includes a test set gradient and/or loss, and the second processing includes gradient aggregation processing and meta model update processing.

When the learning architecture includes split learning (or when the learning architecture is split learning), the first data includes a split layer inference result, the first processing includes inference, gradient computation, reverse transfer, and parameter update processing, the second data includes a split layer gradient, and the second processing includes continuing gradient transfer processing and parameter update processing.

In a possible implementation of the third aspect, the first AI system and the second AI system are configured to perform a same AI task, or the first AI system and the second AI system are configured to perform different subtasks of a same AI task.

In the third aspect of this application, the composition module of the communication apparatus may be further configured to: perform the steps performed in the possible implementations of the first aspect, and achieve corresponding technical effects. For details, refer to the first aspect. Details are not described herein again.

A fourth aspect of this application provides a communication apparatus. The apparatus is a second node, the apparatus is a part of components (for example, a processor, a chip, or a chip system) in the second node, or the apparatus may be a logical module or software that can implement all or a part of functions of the second node. In the fourth aspect and possible implementations of the fourth aspect, an example in which the communication apparatus is the second node is used for description. The second node may be a terminal device or a network device.

The apparatus includes a processing unit and a transceiver unit. The transceiver unit is configured to receive first information, where the first information indicates AI configuration information of a first artificial intelligence AI system, the first AI system and a second AI system belong to a same distributed learning system, the first AI system and the second AI system include at least one same node, and a learning architecture of the first AI system is different from a learning architecture of the second AI system. The processing unit is configured to perform an AI task based on the AI configuration information of the first AI system.

In a possible implementation of the fourth aspect, the second AI system belongs to the first AI system; and the transceiver unit is further configured to receive second information, where the second information indicates AI configuration information of the second AI system; and the transceiver unit is further configured to send a part or all of the AI configuration information of the second AI system to a control node of the second AI system.

In a possible implementation of the fourth aspect, the AI configuration information of the first AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system; and/or
the AI configuration information of the second AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

In a possible implementation of the fourth aspect, the learning architecture includes federated learning, federated distillation, decentralized learning, meta learning, or split learning.

In a possible implementation of the fourth aspect, the first AI system or the second AI system is configured to: perform first processing on first data to obtain second data, and perform second processing on the second data.

When the learning architecture includes federated learning (or when the learning architecture is federated learning), the first data includes a parameter and/or a gradient of a global model, the first processing includes local training processing, the second data includes a parameter and/or a gradient of a local model, and the second processing includes aggregation processing.

When the learning architecture includes federated distillation (or when the learning architecture is federated distillation), the first data includes global logits, the first processing includes local training processing, the second data includes local logits, and the second processing includes aggregation processing.

When the learning architecture includes decentralized learning (or when the learning architecture is decentralized learning), the first data includes a parameter and/or a gradient of a first local model, the first processing includes aggregation processing and local training processing, the second data includes a parameter and/or a gradient of a second local model, and the second processing includes aggregation processing and local training processing.

When the learning architecture includes meta learning (or when the learning architecture is meta learning), the first data includes a parameter and/or a gradient of a meta model, the first processing includes support set training processing and test set gradient computation processing, the second data includes a test set gradient and/or loss, and the second processing includes gradient aggregation processing and meta model update processing.

When the learning architecture includes split learning (or when the learning architecture is split learning), the first data includes a split layer inference result, the first processing includes inference, gradient computation, reverse transfer, and parameter update processing, the second data includes a split layer gradient, and the second processing includes continuing gradient transfer processing and parameter update processing.

In a possible implementation of the fourth aspect, the first AI system and the second AI system are configured to perform a same AI task, or the first AI system and the second AI system are configured to perform different subtasks of a same AI task.

In the fourth aspect of this application, the composition module of the communication apparatus may be further configured to: perform the steps performed in the possible implementations of the second aspect, and achieve corresponding technical effects. For details, refer to the second aspect. Details are not described herein again.

A fifth aspect of embodiments of this application provides a communication apparatus, including at least one processor. The at least one processor is configured to execute a program or instructions in a memory, to cause the apparatus to implement the method according to any one of the first aspect or the possible implementations of the first aspect.

A sixth aspect of embodiments of this application provides a communication apparatus, including at least one processor. The at least one processor is configured to execute a program or instructions in a memory, to cause the apparatus to implement the method according to any one of the second aspect or the possible implementations of the second aspect.

A seventh aspect of embodiments of this application provides a communication apparatus, including at least one logic circuit and an input/output interface. The logic circuit is configured to perform the method according to any one of the first aspect or the possible implementations of the first aspect.

An eighth aspect of embodiments of this application provides a communication apparatus, including at least one logic circuit and an input/output interface. The logic circuit is configured to perform the method according to any one of the second aspect or the possible implementations of the second aspect.

A ninth aspect of embodiments of this application provides a computer-readable storage medium. The storage medium is configured to store one or more computer-executable instructions. When the computer-executable instructions are executed by a processor, the processor performs the method according to any possible implementation of the first aspect or the second aspect.

A tenth aspect of embodiments of this application provides a computer program product (or referred to as a computer program). When the computer program product is executed by a processor, the processor performs the method according to any possible implementation of the first aspect or the second aspect.

An eleventh aspect of embodiments of this application provides a chip system. The chip system includes at least one processor, configured to support a communication apparatus in implementing a function in any possible implementation of the first aspect or the second aspect.

In a possible design, the chip system may further include a memory. The memory is configured to store program instructions and data that are necessary for the first communication apparatus. The chip system may include a chip, or may include a chip and another discrete device. Optionally, the chip system further includes an interface circuit, and the interface circuit provides program instructions and/or data for the at least one processor.

A twelfth aspect of embodiments of this application provides a communication system. The communication system includes the communication apparatus in the third aspect and the communication apparatus in the fourth aspect, the communication system includes the communication apparatus in the fifth aspect and the communication apparatus in the sixth aspect, and/or the communication system includes the communication apparatus in the seventh aspect and the communication apparatus in the eighth aspect.

For technical effects brought by any design manner in the third aspect to the twelfth aspect, refer to technical effects brought by different design manners in the first aspect and the second aspect. Details are not described herein again.

## BRIEF DESCRIPTION OF DRAWINGS

FIG. 1a is a diagram of a communication system according to this application;

FIG. 1b is another diagram of a communication system according to this application;

FIG. 1c is another diagram of a communication system according to this application;

FIG. 1d is a diagram of an AI processing process in this application;

FIG. 1e is another diagram of an AI processing process in this application;

FIG. 2a is another diagram of an AI processing process in this application;

FIG. 2b is another diagram of an AI processing process in this application;

FIG. 2c is another diagram of an AI processing process in this application;

FIG. 2d is another diagram of an AI processing process in this application;

FIG. 2e is another diagram of an AI processing process in this application;

FIG. 2f is another diagram of an AI processing process in this application;

FIG. 2g is another diagram of an AI processing process in this application;

FIG. 3a is another diagram of an AI processing process in this application;

FIG. 3b is another diagram of an AI processing process in this application;

FIG. 3c is another diagram of an AI processing process in this application;

FIG. 4 is a diagram of interaction in a communication method according to this application;

FIG. 5 is another diagram of interaction in a communication method according to this application;

FIG. 6 is another diagram of interaction in a communication method according to this application;

FIG. 7a is another diagram of interaction in a communication method according to this application;

FIG. 7b is another diagram of interaction in a communication method according to this application;

FIG. 8 is a diagram of a communication apparatus according to this application;

FIG. 9 is another diagram of a communication apparatus according to this application;

FIG. 10 is another diagram of a communication apparatus according to this application;

FIG. 11 is another diagram of a communication apparatus according to this application; and

FIG. 12 is another diagram of a communication apparatus according to this application.

## DESCRIPTION OF EMBODIMENTS

First, some terms in embodiments of this application are described for ease of understanding by a person skilled in the art.

(1) Terminal device: It may be a wireless terminal device that can receive scheduling and indication information of a network device. A wireless terminal device may be a device that provides voice and/or data connectivity for users, a handheld device having a wireless connection function, or another processing device connected to a wireless modem.

The terminal device may communicate with one or more core networks or an internet through a radio access network (radio access network, RAN). The terminal device may be a mobile terminal device, for example, a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device like a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless sending and receiving functions. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal (user terminal) device, a user agent (user agent), a subscriber station (subscriber station, SS), a customer premises equipment (customer premises equipment, CPE), a terminal (terminal), user equipment (user equipment, UE), a mobile terminal (mobile terminal, MT), or the like.

By way of example and not limitation, in embodiments of this application, the terminal device may alternatively be a wearable device. The wearable device may also be referred to as a wearable intelligent device, an intelligent wearable device, or the like, and is a general term of wearable devices, for example, glasses, gloves, watches, clothes, and shoes, that are intelligently designed and developed for daily wear by applying a wearable technology. The wearable device is a portable device that can be directly worn on the body or integrated into clothes or an accessory of a user. The wearable device is not merely a hardware device, but also implements a powerful function through software support, data exchange, and cloud interaction. Generalized wearable intelligent devices include full-featured and large-size devices, such as smart watches or smart glasses, that can implement complete or partial functions without depending on smartphones; and devices, such as various smart bands, smart helmets, or smart jewelry for monitoring physical signs, that focus on only one type of application functions and need to work with other devices such as smartphones.

The terminal may alternatively be an uncrewed aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in an evolved communication system (for example, a 6th generation (6th generation, 6G) communication system) after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may further obtain an AI service provided by a network device. Optionally, the terminal device may further have an AI processing capability.

(2) Network device: It may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), or a wireless fidelity (wireless fidelity, Wi-Fi) access point AP. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node; or may be a radio controller in a cloud radio access network (cloud radio access network, CRAN) scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes collaborate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For correspondences between network elements in an ORAN system and protocol layer functions that can be implemented by using the network elements, refer to Table 1.

Table 1

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function to a terminal device. A specific technology and a specific device form that are used for the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service to a terminal or another network device, for example, may be an AI node, a computing capability node, a RAN node having an AI capability, or a core network element having an AI capability on a network side (an access network or a core network).

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines a parameter for communication or a resource for transmission based on the values or the information. Similar to the configuration, the preconfiguration may be parameter information or a parameter value negotiated by a network device/server with a terminal device in advance, may be parameter information or a parameter value that is used by a base station/network device or a terminal device and that is specified in a standard protocol, or may be parameter information or a parameter value prestored in a base station/server or a terminal device. This is not limited in this application.

Further, the values and parameters may be changed or updated.

(4) Terms "system" and "network" in embodiments of this application may be used interchangeably. "A plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

(5) "Sending" and "receiving" in embodiments of this application represent signal transfer directions. For example, "sending information to XX" may be understood as that a destination of the information is the XX, and may include direct sending through an air interface, or include indirect sending through an air interface by another unit or module. "Receiving information from YY" may be understood as that a source of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, assemblies, chips, software modules, or hardware modules inside the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining the to-be-indicated information.

In this application, for same or similar parts of embodiments, mutual reference may be made between embodiments, unless otherwise specified. In embodiments of this application and methods/designs/implementations in embodiments, unless otherwise specified or a logic conflict occurs, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

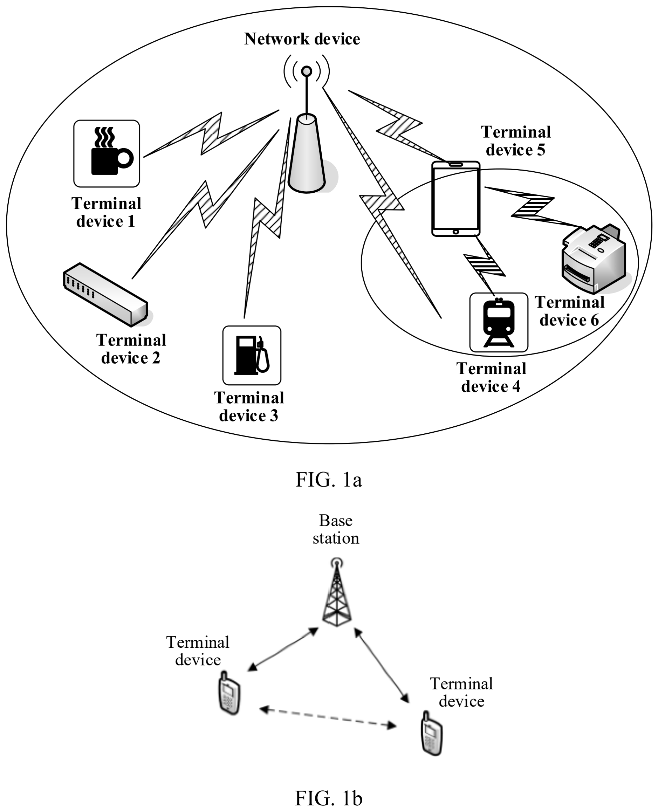

FIG. 1a is a diagram of a communication system in this application. FIG. 1a shows an example of one network device and six terminal devices. The six terminal devices are respectively a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. In addition, the network device may send configuration information to the terminal device 1 to the terminal device 6.

For example, in FIG. 1a, the terminal device 4 to the terminal device 6 may also form a communication system. The terminal device 5 serves as a network device, namely, an AI configuration information sending entity. The terminal device 4 and the terminal device 6 serve as terminal devices, namely, AI configuration information receiving entities. For example, in an internet of vehicles system, the terminal device 5 separately sends AI configuration information to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

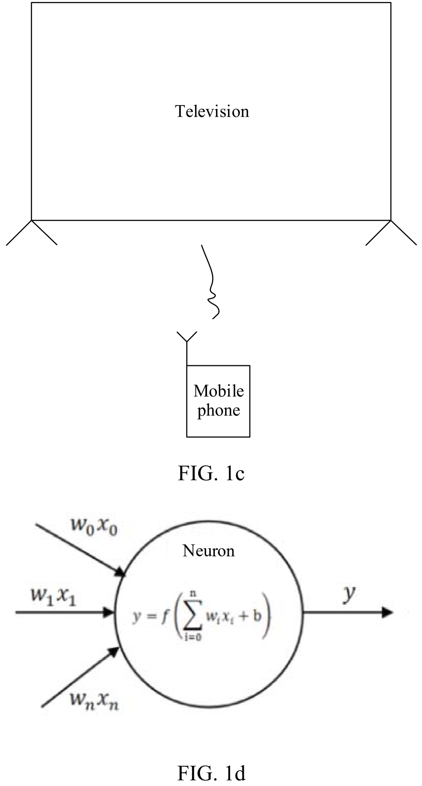

The communication system shown in FIG. 1a is used as an example. In addition to a communication-related service, an AI-related service may be performed between different devices (including between network devices, between a network device and a terminal device, and/or between terminal devices). For example, as shown in FIG. 1b, an example in which a network device is a base station is used. A communication-related service and an AI-related service may be performed between the base station and one or more terminal devices, and a communication-related service and an AI-related service may also be performed between different terminal devices. For another example, as shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in the communication system. For example, the AI network element may be an AI module built in an access network device, a core network device, a cloud server, or an operation, administration and maintenance (operation, administration and maintenance, OAM), to implement an AI-related function. The OAM may be used as a network management system of a core network device and/or as a network management system of an access network device. Alternatively, the AI network element may be an independently disposed network element in the communication system. Optionally, a terminal or a chip built in the terminal may alternatively include the AI entity, to implement the AI-related function.

The following briefly describes artificial intelligence (artificial intelligence, AI) that may be used in this application.

Artificial intelligence (artificial intelligence, AI) can enable machines to have human intelligence, for example, can enable the machines to use computer software and hardware to simulate specific intelligent human behavior. To implement the artificial intelligence, a machine learning method may be used. In the machine learning method, a machine obtains a model through learning (or training) by using training data. The model represents mapping from an input to an output. The model obtained through the learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. Unsupervised learning may also be referred to as non-supervised learning.

In terms of supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by computing an error between the predicted value of the model and a sample label (ideal value). After the mapping relationship is learned, a new sample label may be predicted by using the learned mapping. The mapping relationship learned through supervised learning may include linear mapping or non-linear mapping. A learning task may be classified into a classification task and a regression task based on a type of a label.

In terms of unsupervised learning, an internal pattern of a sample is explored autonomously by using an algorithm based on a collected sample value. For a specific type of algorithm of unsupervised learning, a sample is used as a supervised signal. In other words, a model learns a mapping relationship between samples. This is referred to as self-supervised learning. During training, a model parameter is optimized by computing an error between a predicted value of the model and the sample. Self-supervised learning may be used for signal compression and decompression restoration. Common algorithms include an autoencoder, a generative adversarial network, and the like.

Reinforcement learning is different from supervised learning, and is an algorithm that learns a problem resolving policy by interacting with an environment. Different from supervised learning and unsupervised learning, a problem of reinforcement learning is that there is no clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. The goal of reinforcement learning is also to learn a mapping relationship between an environment status and an optimal decision action. However, a label of "correct action" cannot be obtained in advance. Therefore, a network cannot be optimized by computing an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of datasets and a mapping relationship between data may be established, to obtain performance better than that of a conventional modeling method.

The idea of the neural network is from a neuron structure of brain tissue. For example, each neuron performs a weighted summation operation on input values of the neuron, and outputs an operation result through an activation function. FIG. 1d is a diagram of a neuron structure. It is assumed that inputs of a neuron are $x = [x_0, x_1, \ldots, x_n]$, and weight values corresponding to all the inputs are respectively $w = [w, w_1, \ldots, w_n]$, where n is a positive integer, each of $w_i$ and $x_i$ may be any possible type like a decimal, an integer (for example, 0, a positive integer, or a negative integer), or a complex number. $w_i$ is used as a weight value of $x_i$, and is used to weight $x_i$. A bias for performing weighted summation on the input values based on the weight values is, for example, b. There may be a plurality of forms of an activation function. Assuming that an activation function of a neuron is $y = f(z) = \max(0, z)$, an output of the neuron is $y = f\left(\sum_{i=0}^{i=n} w_i * x_i + b\right) = \max(0, \sum_{i=0}^{i=n} w_i * x_i + b)$. For another example, an activation function of a neuron is y $= f(z) = z$, and an output of the neuron is $y = f\left(\sum_{i=0}^{i=n} w_i * x_i + b\right) = \sum_{i=0}^{i=n} w_i * x_i + b$. b may be any possible type like a decimal, an integer (for example, 0, a positive integer, or a negative integer), or a complex number. Activation functions of different neurons in a neural network may be the same or different.

In addition, the neural network usually includes a plurality of layers, and each layer may include one or more neurons. A depth and/or a width of the neural network are/is increased, so that an expression capability of the neural network can be improved, and more powerful information extraction and abstraction modeling capabilities can be provided for a complex system. The depth of the neural network may refer to a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs computation on the received processing result to obtain a computation result. The hidden layer transfers the computation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). Based on a network construction manner, the DNN may include a feedforward neural network (feedforward neural network, FNN), a convolutional neural network (convolutional neural network, CNN), and a recurrent neural network (recurrent neural network, RNN).

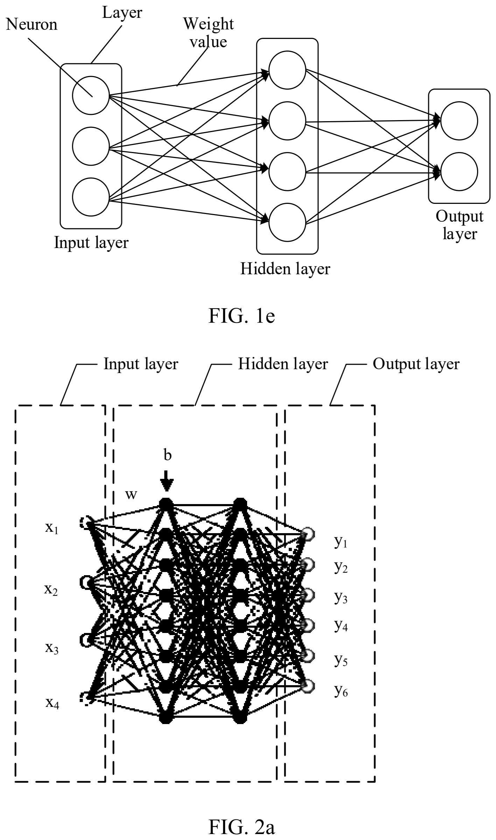

A feature of the FNN network is that neurons at adjacent layers are completely connected to each other. Due to this feature, the FNN usually needs a large amount of storage space, resulting in high computation complexity. FIG. 1e is a diagram of an FNN network.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at one time. This greatly reduces a computation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing machine learning model training process, a loss function may be defined. The loss function describes a gap or a difference between an output value of the model and an ideal target value. The loss function may be represented in a plurality of forms. A specific form of the loss function is not limited. The model training process may be considered as the following process: A part or all of parameters of the model are adjusted, so that a value of the loss function is less than a threshold or meets a target requirement.

The model may also be referred to as an AI model, a rule, or another name. The AI model may be considered as a specific method for implementing an AI function. The AI model represents a mapping relationship or a function between an input and an output of the model. The AI function may include one or more of the following: data collection, model training (or model learning), model information release, model deduction (or referred to as model inference, inference, prediction, or the like), model monitoring or model verification, inference result release, or the like. The AI function may also be referred to as an AI (related) operation or an AI-related function.

The following provides example descriptions for an implementation process of the neural network with reference to the accompanying drawings.

1. Fully-connected neural network

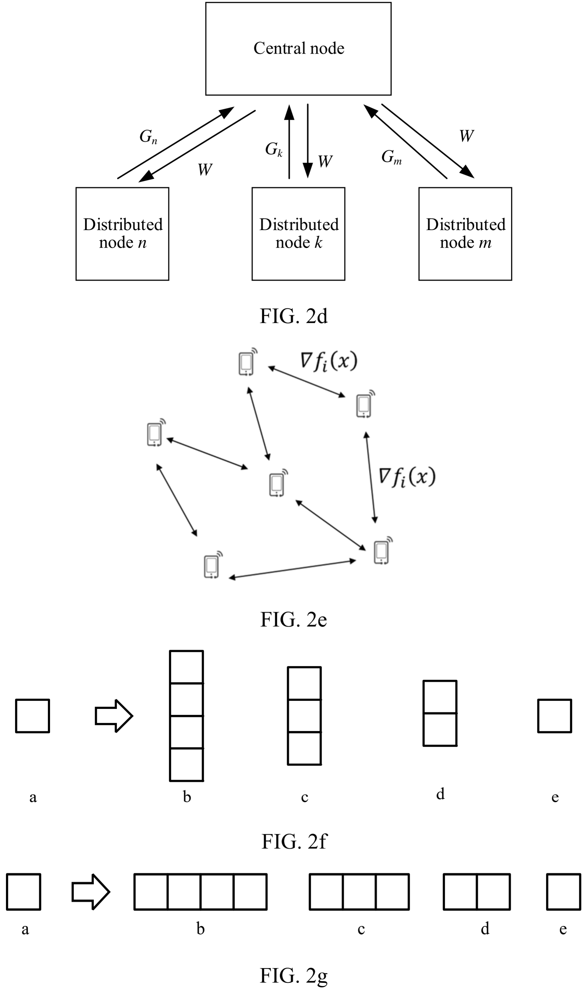

It is also referred to as a multilayer perceptron (multilayer perceptron, MLP). As shown in FIG. 2a, one MLP includes one input layer (left side), one output layer (right side), and a plurality of hidden layers (middle). Each layer of the MLP includes several nodes, which are referred to as neurons. Neurons of two neighboring layers are connected to each other in pairs.

Optionally, in consideration of neurons of two neighboring layers, an output h of a neuron of a next layer is obtained by performing an activation function on a weighted sum of all neurons x of a previous layer that are connected to the neuron of the next layer, and may be expressed as follows:

$$h = f(wx + b).$$

w is a weight matrix, b is a bias vector, and f is the activation function.

Further, optionally, an output of the neural network may be recursively expressed as:

$$y = f_n(w_n f_{n-1}(\dots) + b_n).$$

n is an index of a neural network layer, $1 \leq n \leq N$, and N is a total quantity of layers of the neural network.

In other words, the neural network may be understood as a mapping relationship from an input data set to an output data set. The neural network is usually initialized randomly, and a process of obtaining the mapping relationship from random w and b by using existing data is referred to as training of the neural network.

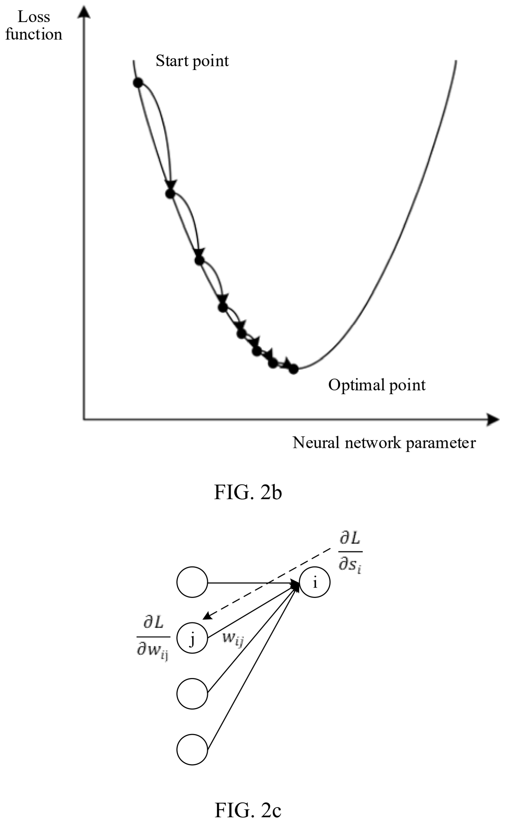

Optionally, a specific training manner is to evaluate an output result of the neural network by using a loss function (loss function). As shown in FIG. 2b, an error may be backpropagated, and neural network parameters (including $w$ and $b$) can be iteratively optimized according to a gradient descent method until the loss function reaches a minimum value, namely, an "optimal point" in FIG. 2b. It can be understood that a neural network parameter corresponding to the "optimal point" in FIG. 2b may be used as a neural network parameter in trained AI model information.

Further, optionally, a gradient descent process may be expressed as:

$$\boldsymbol{\theta} \leftarrow \boldsymbol{\theta} - \eta \frac{\partial L}{\partial \boldsymbol{\theta}}.$$

$\theta$ is to-be-optimized parameters (including $w$ and $b$), L is the loss function, $\eta$ is a learning rate for controlling a gradient descent step, $\partial$ represents a derivation operation, and $\frac{\partial L}{\partial \theta}$ represents a derivative of computing $\theta$ for $L$.

Further, optionally, a chain rule for obtaining a partial derivative is used in a backpropagation process. As shown in FIG. 2c, a gradient of a parameter of a previous layer may be recursively computed based on a gradient of a parameter of a next layer, and may be expressed as follows:

$$\frac{\partial L}{\partial w_{ij}} = \frac{\partial L}{\partial s_i} \frac{\partial s_i}{\partial w_{ij}}.$$

$w_{ij}$ is a weight of connecting a node j to a node i, and $s_i$ is a weighted sum of inputs on the node i.

2. Federated learning (Federated Learning, FL)

The concept of federated learning is proposed to effectively resolve difficulties faced by current development of artificial intelligence. While ensuring user data privacy and security, federated learning facilitates collaboration between each edge device and a central-end server to efficiently complete a learning task of a model. As shown in FIG. 2d, an FL architecture is a currently most widely used training architecture in the FL field. A FedAvg algorithm is a basic algorithm of FL. An algorithm procedure of the FedAvg algorithm is as follows:

(1) A central end initializes a to-be-trained model $w_g^0$ and broadcasts the model to all client devices.

(2) In a ($t \in [1,T]$)th round, a client $k \in [1, K]$ trains a received global model $w_g^{t-1}$ based on a local dataset $\mathcal{D}_k$ for $E$ epochs to obtain a local training result $w_k^t$, and reports the local training result to a central node.

(3) The central node summarizes and collects local training results from all (or some) clients. It is assumed that a set of clients that upload a local model in a $t$th round is $\mathcal{S}^t$. The central end performs weighted averaging by using a quantity of samples of a corresponding client as a weight to obtain a new global model, and a specific update rule is

$$w_g^t = \sum_{k \in \mathcal{S}^t} \frac{D_k w_k^t}{\sum_{k \in \mathcal{S}^t} D_k}.$$

Then, the central end broadcasts and sends a global model $w_g^t$ of a latest version to all the client devices for a new round of training.

(4) Steps (2) and (3) are repeated until the model converges finally or a quantity of training rounds reaches an upper limit.

In addition to reporting a local model $w_k^t$, a trained local gradient $g_k^t$ may also be reported. The central node averages local gradients, and updates the global model based on a direction of an average gradient.

It can be learned that, in an FL framework, datasets exist on distributed nodes. To be specific, the distributed nodes collect local datasets, perform local training, and report local results (models or gradients) obtained through training to the central node. The central node has no dataset, is only responsible for aggregating the training results of the distributed nodes to obtain a global model, and delivers the global model to the distributed nodes.

3. Decentralized learning

Different from federated learning, another distributed learning architecture-decentralized learning is shown in FIG. 2e, that is, a fully distributed system without a central node is considered. A design objective $f(x)$ of a decentralized learning system is usually an average value of targets $f_i(x)$ of all nodes, that is, $f(x) = \frac{1}{n} \sum_{i=1}^n f_i(x)$, where $n$ is a quantity of distributed nodes, and $x$ is a to-be-optimized parameter. In machine learning, $x$ is a parameter of a machine learning (for example, neural network) model. Each node computes a local gradient $\nabla f_i(x)$ by using local data and the local target $f_i(x)$, and then sends the local gradient to a neighboring node that is reachable in communication. After receiving gradient information sent by a neighboring node of any node, the node may update a parameter $x$ of a local model according to the following formula:

$$x_i^{k+1} = x_i^k - \alpha_k \left( \frac{1}{|N_i|} \sum_{j \in N_i} \nabla f_j(x_j^k) \right).$$

$N_i$ is a neighboring node set of a node $i$, and $|N_i|$ represents a quantity of elements in the neighboring node set of the node $i$, namely, a quantity of neighboring nodes of the node $i$. Through information exchange between nodes, the decentralized learning system will finally obtain a unified model through learning.

4. Scalable distributed learning

In federated learning and decentralized learning described above, nodes need to exchange complete neural network model parameters or gradients. When a neural network model can be split into a plurality of submodels, parameters or gradients of some submodels may be exchanged.

For example, a scalable neural network model may be classified into a width scalable neural network model shown in FIG. 2f and a depth scalable neural network model shown in FIG. 2g, and the width scalable neural network model and the depth scalable neural network model are respectively formed by horizontal superposition or vertical concatenation of submodels. For example, in FIG. 2f, for one neural network model a of a complete neural network model, a neural network model b/c/d/e in FIG. 2f may be obtained by scaling a quantity of layers of the neural network in a vertical direction.

For another example, in FIG. 2g, for one neural network model a of a complete neural network model, a neural network model b/c/d/e in may be obtained by scaling a quantity of neurons of a same layer of the neural network in a horizontal direction.

It should be noted that, in FIG. 2f, although the model a and the model e have a same quantity of model layers, the neural network model b/c/d/e is obtained by scaling the model a. Usually, the neural network model b/c/d has more parameters and better performance than the neural network model a. Therefore, during actual application, the neural network model a may be used independently as the neural network model e (which may have poorer performance), or may be used after being scaled to the neural network model b/c/d with more parameters based on performance and complexity requirements. Similarly, in FIG. 2g, the neural network model a may be used independently as the neural network model e (which may have poorer performance), or may be used after being scaled to the neural network model b/c/d with more parameters based on performance and complexity requirements.

Distributed learning performed based on a scalable neural network model is referred to as scalable distributed learning. In a scalable distributed learning system, nodes may exchange parameters or gradients of submodels instead of parameters or gradients of complete models, to reduce communication overheads.

The technical solutions provided in this application may be applied to a wireless communication system (for example, the system shown in FIG. 1a or FIG. 1b). In the wireless communication system, a communication node usually has signal sending and receiving capabilities and a computing capability. A network device having a computing capability is used as an example. The computing capability of the network device is mainly to provide computing capability support for signal sending and receiving capabilities (for example, compute a time domain resource, a frequency domain resource, and the like that carry a signal), to implement a communication task between the network device and another communication node.

However, in a communication network, in addition to providing the computing capability support for the foregoing communication task, the communication node may further have a redundant computing capability. Therefore, how to use the computing capabilities is a technical problem to be urgently resolved.

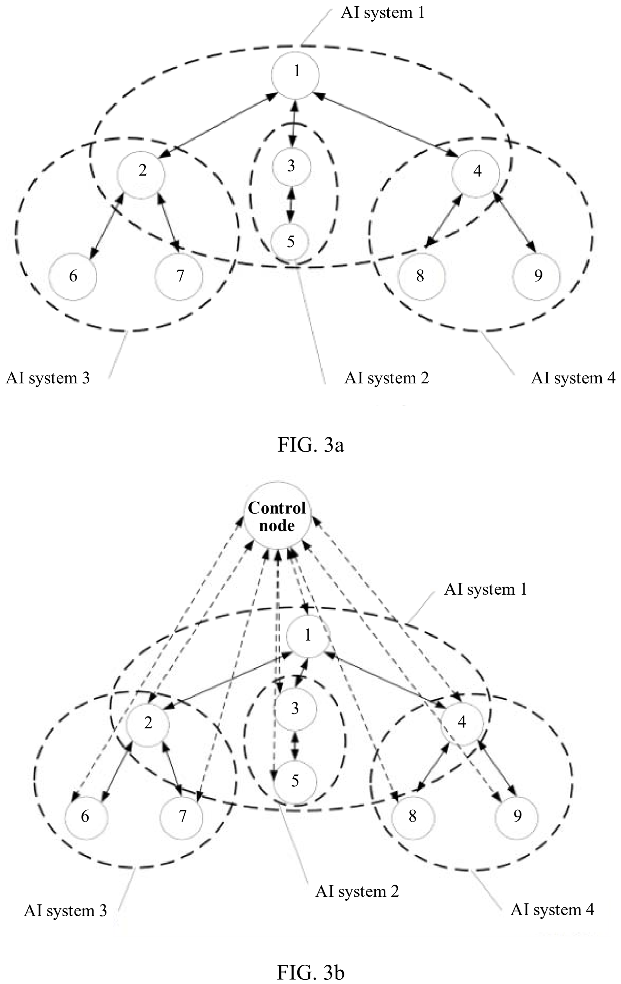

In a possible implementation, the computing capability of the communication node may be used in the centralized scenario shown in FIG. 2d or the decentralized scenario shown in FIG. 2e. Usually, for a node, in the foregoing scenario, a learning system in which the node is located is configured to perform an AI task, in other words, data received or sent by any node in the learning system belongs to a same AI task. However, a node may usually communicate with a plurality of other nodes. Therefore, in a learning system in which a plurality of nodes are located, a node may form an AI system with some nodes to perform an AI task, and the node may also form another AI system with some other nodes to perform an AI task. It should be noted that the two AI tasks performed by the node may be a same AI task, or may be different subtasks of a same AI task. An example in which the two AI tasks performed by the node are different subtasks of a same AI task is used below for description with reference to an example shown in FIG. 3a.

For example, FIG. 3a is a diagram in which a learning system includes a plurality of AI systems in a federated learning scenario. In the diagram, an example in which the learning system includes nine nodes: a node 1, a node 2, ..., and a node 9 is used.

In an AI system 1 including the node 1, the node 2, the node 3, the node 4, and the node 5, after updating local models, the node 2, the node 3, the node 4, and the node 5 upload updated local models/gradients to the node 1, and subsequently, the node 1 may perform model/gradient aggregation.

In an AI system 2 including the node 3 and the node 5, after updating a local model, the node 3 uploads an updated local model/gradient to the node 5, and subsequently, the node 5 may perform model/gradient aggregation.

In an AI system 3 including the node 2, the node 6, and the node 7, after updating local models, the node 6 and the node 7 upload updated local models/gradients to the node 2, and subsequently, the node 2 may perform model/gradient aggregation.

In an AI system 3 including the node 4, the node 8, and the node 9, after updating local models, the node 8 and the node 9 upload updated local models/gradients to the node 4, and subsequently, the node 4 may perform model/gradient aggregation.

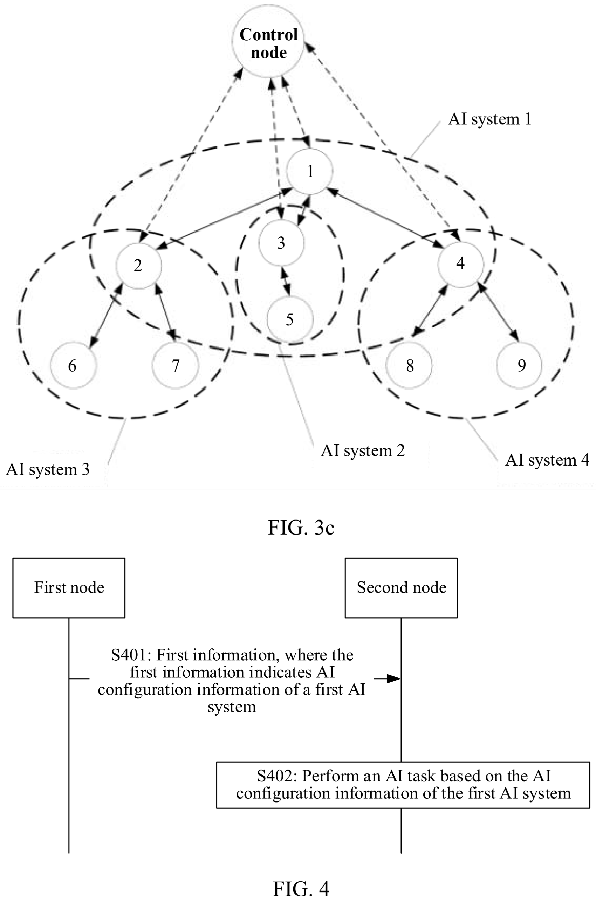

Optionally, in FIG. 3a, the node 1 may serve as a control node of a learning system in which the AI system 1, the AI system 2, the AI system 3, and the AI system 4 are located. Alternatively, in addition to the nine nodes shown in FIG. 3a, there is an additional control node. For example, as shown in FIG. 3b, the control node may be connected to each node, to control a configuration of each node in each AI system. For another example, as shown in FIG. 3c, the control node may be connected to a control node of each AI system, to configure each node in each AI system via the control node of each AI system.

It can be learned from the foregoing implementation process that one AI system may include a data aggregation node, and the node may receive AI data of another node and perform aggregation processing. For example, the node may be the node 1 in the AI system 1, the node 3 in the AI system 2, the node 2 in the AI system 3, or the node 4 in the AI system 4. Correspondingly, the node may be referred to as a control node, a central node, an aggregation node, or the like in the AI system in which the node is located.

Optionally, in the scenario shown in FIG. 3a/FIG. 3b/FIG. 3c, the node in each AI system may be a terminal device. Alternatively, in the scenario shown in FIG. 3a/FIG. 3b/FIG. 3c, the control node of one or more AI systems may be a network device, and another node different from the control node of the one or more AI systems may be a terminal device. The following uses the scenario shown in FIG. 3c as an example for description.

In an implementation example, in the scenario shown in FIG. 3c, the control node may be a core network element; a control node (namely, the node 1) of the AI system 1, a control node (namely, the node 3) of the AI system 2, a control node (namely, the node 2) of the AI system 3, and a control node (namely, the node 4) of the AI system 4 may be access network elements; and other nodes (namely, the node 5, the node 6, the node 7, the node 8, and the node 9) different from the control node may be terminal devices.

In another implementation example, in the scenario shown in FIG. 3c, the control node may be a macro base station; a control node (namely, the node 1) of the AI system 1, a control node (namely, the node 3) of the AI system 2, a control node (namely, the node 2) of the AI system 3, and a control node (namely, the node 4) of the AI system 4 may be micro base stations, home base stations, or the like; and other nodes (namely, the node 5, the node 6, the node 7, the node 8, and the node 9) different from the control node may be terminal devices.

However, in the scenario shown in FIG. 3a/FIG. 3b/FIG. 3c, capabilities, data, requirements, or the like of nodes in different AI systems may be different. However, in the foregoing scenario, different AI systems use a same learning architecture of federated learning. This lacks flexibility.

To resolve the foregoing problem, this application provides a communication method and a related device, to enable a computing capability of a communication node to be applied to an AI task in a learning system, and improve implementation flexibility of different AI systems of a same learning system. Detailed descriptions are provided below with reference to the accompanying drawings.

FIG. 4 is a diagram of an implementation of a communication method according to this application. The method includes the following steps.

It should be noted that in FIG. 4, the method is illustrated by using an example in which a first node and a second node are used as execution bodies of the interaction example. However, the execution bodies of the interaction example are not limited in this application. For example, in FIG. 4 and a corresponding implementation, an execution body of S401 is the first node, and the execution body may alternatively be a chip, a chip system, or a processor that supports the first node in implementing the method, or may be a logical module or software that can implement all or some functions of the first node. In FIG. 4 and a corresponding implementation, the second node in S401 and S402 may alternatively be replaced with a chip, a chip system, or a processor that supports the second node in implementing the method, or may be replaced with a logical module or software that can implement all or some functions of the second node.

S401: The first node sends first information, and correspondingly, the second node receives the first information. The first information indicates AI configuration information of a first AI system.

It should be understood that, that the first information indicates the AI configuration information of the first AI system may be understood as follows: The first information includes an index of the AI configuration information of the first AI system, so that a receiver of the first information can obtain the AI configuration information of the first AI system based on the index; or the first information includes the AI configuration information of the first AI system, so that a receiver of the first information can obtain the AI configuration information of the first AI system from the first information. Similarly, that second information indicates AI configuration information of a second AI system in the following descriptions may be understood as follows: The second information includes an index of the AI configuration information of the second AI system, so that a receiver of the second information can obtain the AI configuration information of the second AI system based on the index; or the second information includes the AI configuration information of the second AI system, so that a receiver of the second information can obtain the AI configuration information of the second AI system from the second information.

Optionally, the first information (and/or the second information) sent by the first node may be carried in one or more of an RRC layer message, a PDCP layer message, a MAC layer message, and a PHY layer message.

S402: The first node performs an AI task based on the AI configuration information of the first AI system.

In this application, a learning system may be understood as a system in which one or more nodes learn data in an AI manner. The learning system may be replaced with an AI learning system, a machine learning system, or the like. That the first AI system and the second AI system belong to a same learning system may be understood as that the first AI system includes some nodes in the same learning system, and the second AI system also includes some nodes in the same learning system. The same learning system may include at least two AI systems, for example, the first AI system and the second AI system. Each AI system includes one or more nodes, and the first AI system and the second AI system include at least one same node.

Optionally, in the same learning system, the first AI system and the second AI system are configured to perform a same AI task, or the first AI system and the second AI system are configured to perform different subtasks of a same AI task.

In an implementation example, an example in which the first AI system and the second AI system are configured to perform a same AI task is used. For example, an AI task performed by the same learning system may be an autonomous driving model training task, in other words, each of the first AI system and the second AI system is configured to perform an autonomous driving task. After obtaining model training results corresponding to the autonomous driving task, different AI systems may aggregate the model training results through interaction. For example, the first AI system and the second AI system may separately send locally obtained model training results to each other, so that the two parties can further aggregate the locally obtained model training result and the model training result of the other party, to obtain an aggregated result. For another example, both the first AI system and the second AI system may send locally obtained model training results to a control node of the learning system, so that the control node can aggregate the model training results of the two parties to obtain an aggregated result, and then separately send the aggregated result to the first AI system and the second AI system.

In another implementation example, an example in which the first AI system and the second AI system are configured to perform different subtasks of a same AI task is used. For example, the AI task performed by the same learning system may still be the autonomous driving model training task. Usually, image recognition is a necessary part required by the autonomous driving task. For example, an image recognition task like a human body image recognition task, a vehicle license plate image recognition task, or an obstacle image recognition task may be a subtask of the autonomous driving task. Therefore, the subtask performed by the first AI system and the subtask performed by the second AI subsystem may be two different tasks of the human body image recognition task, the vehicle license plate image recognition task, and the obstacle image recognition task. Similarly, the first AI system and the second AI system may also implement a model aggregation process in a manner of interacting with each other or in a manner of interacting with a control node of the learning system.

Optionally, the first AI system and the second AI system include a completely same node. In this case, if the first AI system and the second AI system perform different subtasks of a same AI task, a set of same nodes used to perform a subtask may also be considered as the first AI system, and a set of same nodes used to perform the other subtask may be considered as the second AI system.

Optionally, the first AI system includes the node in the second AI system, and further includes another node. In this case, the second AI system may be referred to as a subsystem of the first AI system, a lower-level system of the first AI system, a subset of the first AI system, or the like. Alternatively, the second AI system includes the node in the first AI system, and further includes another node. In this case, the first AI system may be referred to as a subsystem of the second AI system, a lower-level system of the second AI system, a subset of the second AI system, or the like.

It should be understood that the first node is located in the learning system in which the first AI system and the second AI system are located, and the first node is configured to determine and deliver AI configuration information of AI systems included in the learning system. The first node may be a control device, a control node, a scheduling node, a scheduling device, a management and control device, a management and control node, or the like of the learning system. The learning system may include only the first AI system and the second AI system, and the learning system may further include another AI system different from the first AI system and the second AI system. This is not limited herein. In addition, each AI system (for example, the first AI system or the second AI system) may include one or more communication nodes, and the one or more communication nodes include a network device and/or a terminal device.

Optionally, the first node may be a device in a communication system, in other words, a node in the learning system may be a communication node. For example, the first node may be a network device or a terminal device. When the first node is a network device, the first node may be an access network device, for example, a base station; one or a combination of a plurality of a CU-CP, a CU-UP, a DU, and an RU in an ORAN; or a macro base station. Alternatively, the first node may be a core network device, for example, a network data analytics function (network data analytics function, NWDAF) network element. Similarly, in the first AI system, the second node may also be a network device or a terminal device.

Based on the technical solution shown in FIG. 4, the first information received by the second node in step S401 indicates the AI configuration information of the first AI system. Subsequently, the second node may perform an AI task based on the AI configuration information of the first AI system in step S402. The first AI system and the second AI system include the at least one same node, and a learning architecture of the first AI system is different from a learning architecture of the second AI system. In other words, in the same learning system in which the first AI system and the second AI system are located, the at least one same node may perform an AI task in the first AI system based on one learning architecture, and the at least one same node may also perform an AI task in the second AI system based on the other learning architecture. In comparison with an implementation in which different AI systems of a same learning system perform AI tasks based on a same learning architecture, in the foregoing technical solution, different AI systems of the same learning system may perform AI tasks based on different learning architectures. Therefore, when a communication node in a communication system serves as a node that participates in the learning system, a computing capability of the communication node can be applied to the AI task in the learning system, and implementation flexibility of the different AI systems of the same learning system can be improved.

In addition, different learning architectures usually have different performance and complexities, and capabilities (for example, computing capabilities and storage capabilities) and requirements of the node that participates in the learning system may also be different. Therefore, in the foregoing technical solution, the different AI systems of the same learning system may perform the AI tasks based on the different learning architectures, so that more learning architectures can be provided, and the requirements and the capabilities of the nodes that participate in the learning system can be better matched.

In addition, different learning architectures usually have different performance gains, and only a performance gain of one learning architecture can be obtained based on the same learning architecture. If an AI task is complex and performance gains of a plurality of learning architectures need to be obtained, in an implementation in which different AI systems of a same learning system perform AI tasks based on a same learning architecture, learning processes of the plurality of learning architectures need to be performed in sequence, and complexity is high. However, in the foregoing technical solution, the different AI systems of the same learning system may separately perform the AI tasks based on the different learning architectures, so that the learning system can obtain performance gains generated by the plurality of learning architectures, to simplify implementation complexity.

In a possible implementation, in addition to being applied to a process of configuring AI configuration information of an AI system (namely, the first AI system) in the learning system, the method shown in FIG. 4 may be further applied to a process of configuring AI configuration information of another AI system. The following provides descriptions by using an example in which the first AI system is the AI system 1 in FIG. 3c and the another AI system includes the second AI system (namely, the AI system 2 in FIG. 3c) with reference to the scenario shown in FIG. 3c.

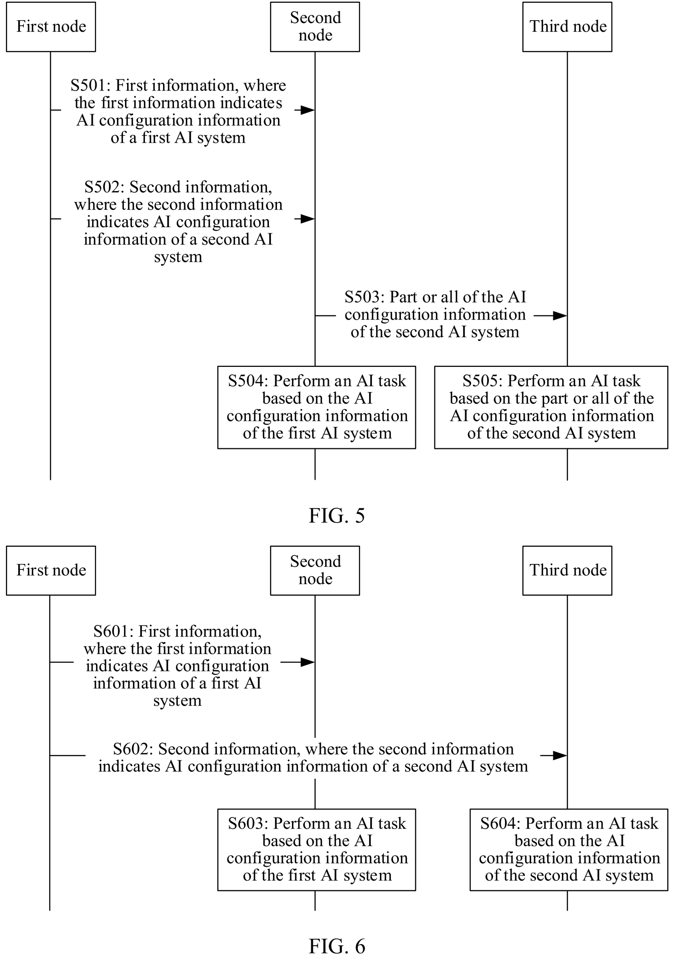

It should be noted that, in FIG. 3c, the control node may serve as the first node, the AI system 1 may serve as the first AI system, and the control node (namely, the node 1) of the AI system 1 may serve as the second node, and the AI system 2 may serve as the second AI system, and the control node (namely, the node 3) of the AI system 2 may serve as a third node. The AI system 1 may be understood as an upper-level AI system of the AI system 2, in other words, the AI system 2 may be understood as a lower-level AI system of the AI system 1. The following separately provides example descriptions, by using processes shown in FIG. 5 and FIG. 6, a process of configuring the AI configuration information of the second AI system.

Refer to FIG. 5. The first AI system may include the second AI system, the first node may serve as a control node (for example, the control node in FIG. 3c), the second node may serve as a control node of the first AI system (for example, the node 1 in the AI system 1 in FIG. 3c), and the third node may serve as a control node of the second AI system (for example, the node 3 in the AI system 2 in FIG. 3c). As shown in FIG. 5, an interaction process of each node includes the following steps.

S501: The first node sends first information, and correspondingly, the second node receives the first information, where the first information indicates AI configuration information of the first AI system.

S502: The first node sends second information, and correspondingly, the second node receives the second information, where the second information indicates AI configuration information of the second AI system.

S503: The second node sends a part or all of the AI configuration information of the second AI system, and correspondingly, the third node receives the part or all of the AI configuration information of the second AI system.

S504: The second node performs an AI task based on the AI configuration information of the first AI system.

S505: The third node performs an AI task based on the part or all of the AI configuration information of the second AI system.

It should be noted that, for an implementation process of sending and receiving the first information in FIG. 5, refer to the foregoing implementation process of sending and receiving the first information in FIG. 4. Similarly, for a process of configuring the AI configuration information of the second AI system, refer to the process of configuring the AI configuration information of the first AI system, in other words, for an implementation process of sending and receiving the second information in FIG. 5, refer to the foregoing implementation process of sending and receiving the first information in FIG. 4.

Based on the implementation process shown in FIG. 5, in the learning system, the second AI system belongs to the first AI system, in other words, the first AI system includes the node in the second AI system, and may further include another node. Therefore, the first node may send the first information and the second information to the control node of the first AI system, so that the control node of the first AI system can perform the AI task based on the AI configuration information that is of the first AI system and that is indicated by the first information. In addition, the second AI system serves as a lower-level system of the first AI system, and the control node of the first AI system may send, to the control node of the second AI system, the part or all of the AI configuration information that is of the second AI system and that is indicated by the second information. In a level-by-level indication manner, the control node of the second AI system can perform the AI task based on the part or all of the AI configuration information.

Refer to FIG. 6. The first AI system may include the second AI system, the first node may serve as a control node (for example, the control node in FIG. 3c), the second node may serve as a control node of the first AI system (for example, the node 1 in the AI system 1 in FIG. 3c), and the third node may serve as a control node of the second AI system (for example, the node 3 in the AI system 2 in FIG. 3c). As shown in FIG. 6, an interaction process of each node includes the following steps.

S601: The first node sends first information, and correspondingly, the second node receives the first information, where the first information indicates AI configuration information of the first AI system.

S602: The first node sends second information, and correspondingly, the third node receives the second information, where the second information indicates AI configuration information of the second AI system.

S603: The second node performs an AI task based on the AI configuration information of the first AI system.

S604: The third node performs an AI task based on the AI configuration information of the second AI system.

It should be noted that, for an implementation process of sending and receiving the first information in FIG. 6, refer to the foregoing implementation process of sending and receiving the first information in FIG. 4. Similarly, for a process of configuring the AI configuration information of the second AI system, refer to the process of configuring the AI configuration information of the first AI system, in other words, for an implementation process of sending and receiving the second information in FIG. 6, refer to the foregoing implementation process of sending and receiving the first information in FIG. 4.

Based on the implementation process shown in FIG. 6, the first node may separately send the first information and the second information to the control node (namely, the second node) of the first AI system and the control node (namely, the third node) of the second AI system, so that the control node of the first AI system and the control node of the second AI system can perform the AI tasks based on the received information in a centralized indication manner.

Optionally, in the implementation shown in FIG. 6, a relationship between the first AI system and the second AI system is not limited. For example, the first AI system may belong to the second AI system, the second AI system may belong to the first AI system, or the first AI system and the second AI system each include another node in addition to the at least one same node.

In a possible implementation, the learning architecture of the first AI system or the second AI system in the foregoing embodiment includes any architecture, for example, federated learning, federated distillation, decentralized learning, meta learning, or split learning, to improve solution implementation flexibility.

In a possible implementation, the AI configuration information (for example, the AI configuration information of the first AI system or the AI configuration information of the second AI system) in the foregoing embodiment includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

It should be understood that, in a process in which the node performs the AI task based on the AI configuration information (for example, the first node performs the AI task based on the AI configuration information of the first AI system, or the second node performs the AI task based on the AI configuration information of the second AI system), the node may perform the AI task based on at least one of the foregoing indication information.

In an implementation example, when the AI configuration information includes the first indication information, the node may determine, based on the first indication information, the node that participates in the AI task, and the node that subsequently participates in the AI task may provide local data/a local computing capability for execution of the AI task. For example, the node that participates in the AI task in the AI system and that is indicated by the first indication information may be determined based on node information such as data distribution, feature distribution, a requirement, a user capability, and communication link quality of each node.

In another implementation example, when the AI configuration information includes the second indication information, the node may determine, based on the second indication information, the role of the node that participates in the AI task, and subsequently, the node may schedule corresponding local data/a corresponding local computing capability of each node based on a role of each node. For example, the role that is of the node and that is indicated by the second indication information may include a distributed node, an aggregation node, a meta-learning central node, and the like. The role of the node may be determined based on a capability (for example, a computing capability, a communication capability, and a storage capability) of each node.

In another implementation example, when the AI configuration information includes the third indication information, the node may determine the learning architecture of the AI system based on the third indication information, and subsequently, the node may schedule each node of the AI system to perform a corresponding AI task based on the learning architecture. For example, the learning architecture that is of the AI system and that is indicated by the third indication information may be determined based on a dataset of the AI system, depending on whether there is a central node, and other information.

For example, when there is no public dataset, there is a central node, and a same model is trained for each node in an AI system, it may be determined that the AI system uses a learning architecture of federated learning. For another example, when there is a public dataset, there is a central node, and a unified model is trained for each node in an AI system, it may be determined that the AI system uses a learning architecture of federated distillation. For another example, when there is no public dataset, there is no central node, and a same model is trained for each node in an AI system, it may be determined that the AI system uses a learning architecture of decentralized learning. For another example, when an AI system is used to train a meta model, it may be determined that the AI system uses a learning architecture of meta learning. For another example, when different parts of a same model in an AI system are deployed on different nodes, it may be determined that the AI system uses a learning architecture of split learning.

In another implementation example, when the AI configuration information includes the fourth indication information, the node may determine the AI task of the AI system based on the fourth indication information, and subsequently, the node may schedule each node of the AI system to perform the AI task. For example, the task targeted by the AI system may be a globally unified task, or may be one-level task in a multi-level task, and is determined by the first node that serves as a control node of a learning model.

In another implementation example, when the AI configuration information includes the fifth indication information, the node may determine the communication resource of the AI system based on the fifth indication information, and subsequently, the node may transmit, based on the communication resource of the AI system, exchanged data related to an AI task. For example, a communication resource of an AI system may include a large time-frequency resource, and subsequently, a control node of the AI system may allocate a small time-frequency resource to exchanged data based on the large time-frequency resource.

Therefore, the AI configuration information that is of the first AI system and that is indicated by the first information or the AI configuration information that is of the second AI system and that is indicated by the second information may include at least one of the foregoing indication information, so that the first AI system or the second AI system can perform the AI task based on at least one of the foregoing indication information, to improve solution implementation flexibility.

Optionally, when the AI configuration information of the second AI system shown in FIG. 5 includes the five pieces of indication information: the first indication information to the fifth indication information, in step S503, the second node may send the five pieces of indication information to the third node, and the second node may alternatively send the five pieces of indication information to the third node, for example, at least one of the second indication information and the fifth indication information.

In a possible implementation, the AI system (for example, the first AI system or the second AI system) in the foregoing embodiment may be configured to: after performing first processing on first data to obtain second data, perform second processing on the second data.

When the learning architecture includes federated learning (or when the learning architecture is federated learning), the first data includes a parameter and/or a gradient of a global model, the first processing includes local training processing, the second data includes a parameter and/or a gradient of a local model, and the second processing includes aggregation processing. It may be understood that when the learning architecture is federated learning, the second processing may include aggregation processing on the local model parameter, and/or the second processing may include aggregation processing on the local model gradient.

When the learning architecture includes federated distillation (or when the learning architecture is federated distillation), the first data includes global logits, the first processing includes local training processing, the second data includes local logits, and the second processing includes aggregation processing. It may be understood that when the learning architecture is federated distillation, the second processing may include aggregation processing on the local logits.

When the learning architecture includes decentralized learning (or when the learning architecture is decentralized learning), the first data includes a parameter and/or a gradient of a first local model, the first processing includes aggregation processing and local training processing, the second data includes a parameter and/or a gradient of a second local model, and the second processing includes aggregation processing and local training processing.

When the learning architecture includes meta learning (or when the learning architecture is meta learning), the first data includes a parameter and/or a gradient of a meta model, the first processing includes support set training processing and test set gradient computation processing, the second data includes a test set gradient and/or loss, and the second processing includes gradient aggregation processing and meta model update processing.

When the learning architecture includes split learning (or when the learning architecture is split learning), the first data includes a split layer inference result, the first processing includes inference, gradient computation, reverse transfer, and parameter update processing, the second data includes a split layer gradient, and the second processing includes continuing gradient transfer processing and parameter update processing.

Alternatively, implementations of the first data, the first processing, the second data, and the second processing may alternatively be implemented by using content in the following Table 2.

Table 2

| Index | Learning architecture | First data | First processing | Second data | Second processing |
|---|---|---|---|---|---|
| 0 | Federated learning | Global model/-gradient | Local training | Local model/-gradient | Parameter/Gradient aggregation |
| 1 | Federated distillation | Global logits | Local training | Local logits | Logits aggregation |
| 2 | Decentralized learning | Local model/-gradient | Parameter/Gradient aggregation and local training | Local model/-gradient | Parameter/Gradient aggregation and local training |
| 3 | Meta learning | Meta model/-gradient | Support set training and test set gradient computation | Test set gradient | Gradient aggregation and meta model update |
| 4 | Split learning | Split layer inference result | Inference, gradient computation, reverse transfer, and parameter update | Split layer gradient | Continuing gradient transfer and parameter update |

Therefore, in different learning architectures, after performing the first processing on the first data to obtain the second data, the first AI system or the second AI system may perform the second processing on the second data. In addition, in the foregoing implementation, specific implementation processes of the first data, the second data, the first processing, and the second processing in different learning architectures are provided.

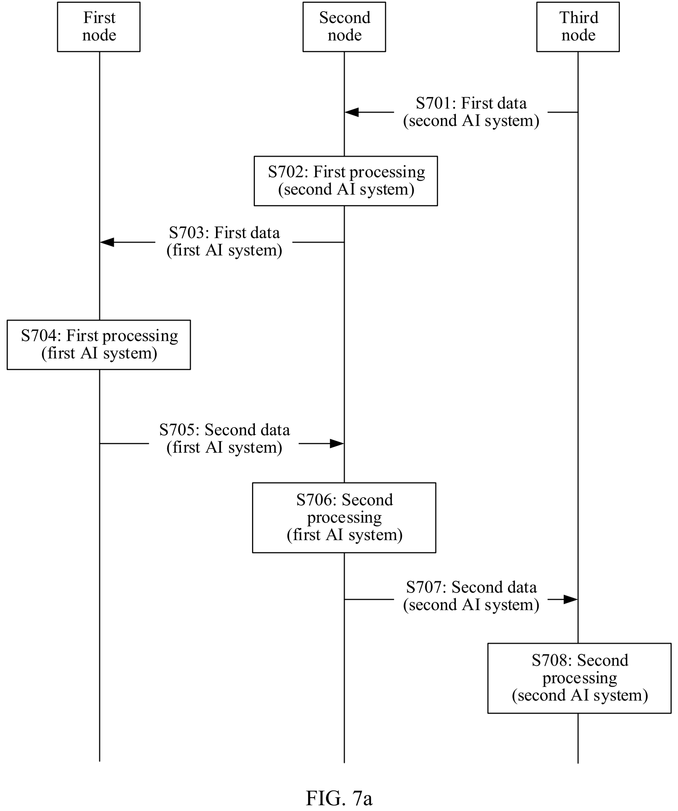

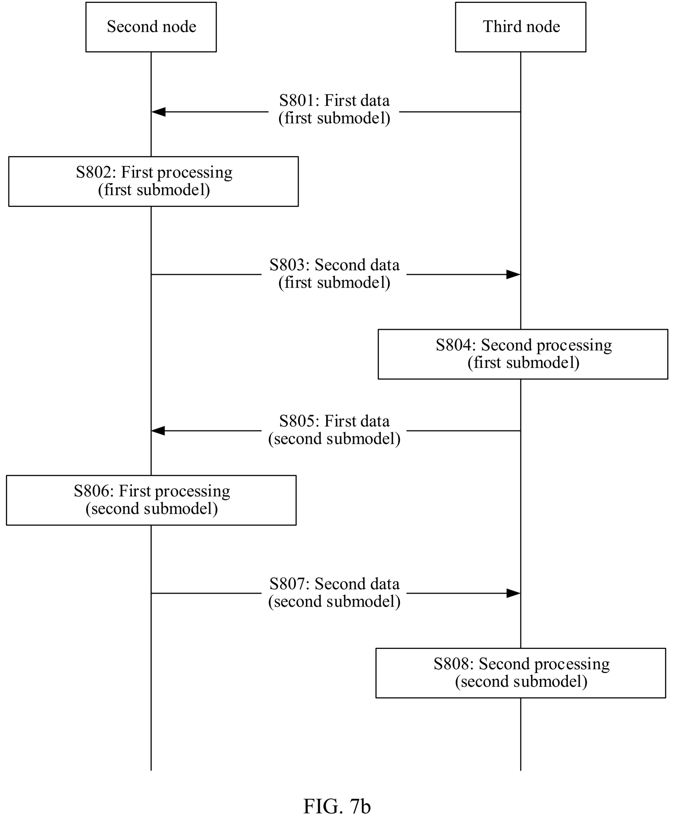

In an implementation example, the following provides example descriptions for implementations of the first data, the first processing, the second data, and the second processing with reference to more implementation examples shown in FIG. 7a and FIG. 7b.

The scenario shown in FIG. 3a is used as an example herein. The learning system includes the AI system 1, the AI system 2, the AI system 3, and the AI system 4 in FIG. 3a. The node 1 serves as a control node (namely, the first node) of the learning system, and also serves as a control node of the AI system 1. The node 3 serves as a control node (namely, the second node) of the AI system 2, and the node 5 may serve as one non-control node (namely, the third node) of the AI system 2. The following describes a process in which the first node, the second node, and the third node exchange the first data and the second data. The AI system 1 may be understood as an upper-level AI system of the AI system 2, in other words, the AI system 2 may be understood as a lower-level AI system of the AI system 1.

FIG. 7a shows a data exchange process between the node in the first AI system and the node in the second AI system, including the following steps.

S701: The third node sends first data, and correspondingly, the second node receives the first data, where the first data in this step is first data in the second AI system.

S702: The second node performs first processing based on the received first data, where the first processing in this step is first processing in the second AI system.

S703: The second node sends first data, and correspondingly, the first node receives the first data, where the first data in this step is first data in the first AI system.

S704: The first node performs first processing based on the received first data, where the first processing in this step is first processing in the first AI system.

S705: The first node sends second data, and correspondingly, the second node receives the second data, where the second data in this step is the first data in the first AI system.

S706: The second node performs second processing based on the received second data, where the second processing in this step is second processing in the first AI system.

S707: The second node sends second data, and correspondingly, the third node receives the second data, where the second data in this step is the first data in the second AI system.

S708: The third node performs second processing based on the received second data, where the second processing in this step is second processing in the second AI system.

It may be understood that, as nodes in the first AI system, the first node and the second node may implement data processing and exchange by using the foregoing process of step S703/S704/S705/S706. As nodes in the second AI system, the second node and the third node may implement data processing and exchange by using the foregoing process of step S701/S702/S707/S708.

In addition, the first AI system and the second AI system may further be configured to perform AI tasks of scalable distributed learning. For example, the AI task may include any one of federated learning of scalable distributed learning, federated distillation of scalable distributed learning, decentralized learning of scalable distributed learning, meta learning of scalable distributed learning, or split learning of scalable distributed learning. For example, the second AI system performs an AI task of scalable distributed learning. Different nodes in the second AI system may focus on different subtasks of the AI task performed by the second AI system, in other words, different nodes in the second AI system may focus on different submodels of an AI model used by the AI task performed by the second AI system. In the following example, the second node in the second AI system focuses on a first submodel, and the third node in the second AI system focuses on a second submodel.

For example, the AI task performed by the second AI system may be an autonomous driving task. Usually, image recognition is a necessary part required by the autonomous driving task. For example, an image recognition task like a human body image recognition task, a vehicle license plate image recognition task, or an obstacle image recognition task may be a subtask of the autonomous driving task. Correspondingly, an AI task performed by the first submodel focused on by the second node or the second submodel focused on by the third node may be any one of the image recognition tasks.

For another example, the AI task performed by the second AI system may be an image classification task (or referred to as an N classification task). Usually, image classification may include image classification between different animals (for example, classification between images of cats and dogs), image classification between different plants (for example, classification between images of herbaceous plants and woody plants), and the like. In other words, tasks such as the image classification between different animals and the image classification between different plants may be subtasks of the image classification task. Correspondingly, an AI task performed by the first submodel focused on by the second node or the second submodel focused on by the third node may be any one of the image classification task between different animals and the image classification task between different plants.

For another example, the AI task performed by the second AI system may be a machine translation task. Usually, a word segmentation task, a syntax analysis task, a sentence rewriting task, and the like may be subtasks of the machine translation task. Correspondingly, an AI task performed by the first submodel focused on by the second node or the second submodel focused on by the third node may be any one of the word segmentation task, the syntax analysis task, and the sentence rewriting task.

The following provides example descriptions, by using an implementation example shown in FIG. 7b, for an implementation process in which the second AI system performs an AI task of scalable distributed learning. As shown in FIG. 7b, the method includes the following steps.

S801: The third node sends first data, and correspondingly, the second node receives the first data, where the first data in this step is first data related to a first submodel.

S802: The second node performs first processing based on the received first data, where the first processing in this step is first processing related to the first submodel.

S803: The second node sends second data, and correspondingly, the third node receives the second data, where the second data in this step is the first data related to the first submodel.

S804: The third node performs second processing based on the received second data, where the second processing in this step is second processing related to the first submodel.

S805: The third node sends first data, and correspondingly, the second node receives the first data, where the first data in this step is first data related to a second submodel.

S806: The second node performs first processing based on the received first data, where the first processing in this step is first processing related to the second submodel.

S807: The second node sends second data, and correspondingly, the third node receives the second data, where the second data in this step is the first data related to the second submodel.

S808: The third node performs second processing based on the received second data, where the second processing in this step is second processing related to the second submodel.

It may be understood that, as nodes in the second AI system, the second node and the third node may exchange data related to the first submodel through a process of the foregoing step S801 to step S804, to implement model update/training/processing/iteration or the like of the first submodel. As nodes in the second AI system, the second node and the third node may exchange data related to the second submodel through a process of the foregoing step S805 to step S808, to implement model update/training/processing/iteration or the like of the second submodel.

In the implementation processes shown in FIG. 7a and FIG. 7b, a learning architecture used by the first AI system is different from a learning architecture used by the second AI system, so that a computing capability of the communication node can be applied to the AI task in the learning system, and implementation flexibility of the different AI systems of the same learning system can be improved. In addition, the different AI systems of the same learning system may separately perform AI tasks based on the different learning architectures, so that more learning architectures can be provided for selection, and requirements and capabilities of the nodes that participate in the learning system can be better matched. In addition, the learning system can also obtain gains generated by the plurality of learning architectures, to simplify implementation complexity.

Optionally, in FIG. 3c, an example in which the control node delivers the AI configuration information to the control node of each AI system is used for description. During actual application of the solution, the control node may deliver AI configuration information to a part or all of nodes of each AI system (for example, the scenario shown in FIG. 3b). For an implementation process of the latter, refer to the foregoing descriptions.

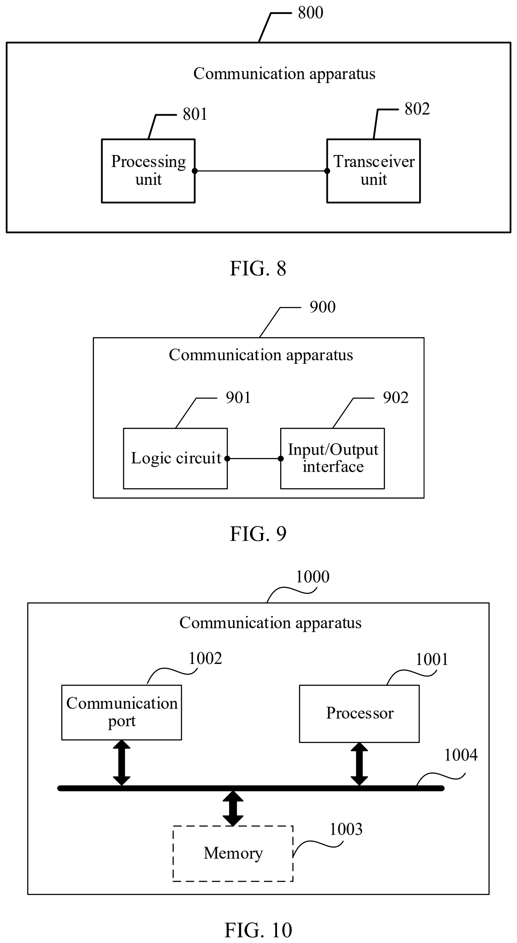

Refer to FIG. 8. An embodiment of this application provides a communication apparatus 800. The communication apparatus 800 can implement a function of the first node (where the first node is a terminal device or a network device) in the foregoing method embodiments, and therefore, can also implement the beneficial effects of the foregoing method embodiments. In this embodiment of this application, the communication apparatus 800 may be the first node, or may be an integrated circuit or an element, for example, a chip, in the first node. In the following embodiment, an example in which the communication apparatus 800 is the first node is used for description.

In a possible implementation, when the apparatus 800 is configured to perform the method performed by the first node in any one of the foregoing embodiments, the apparatus 800 includes a processing unit 801 and a transceiver unit 802. The processing unit 801 is configured to determine first information and second information, where the first information indicates AI configuration information of a first artificial intelligence AI system, the second information indicates AI configuration information of a second AI system, the first AI system and the second AI system belong to a same learning system, the first AI system and the second AI system include at least one same node, and a learning architecture of the first AI system is different from a learning architecture of the second AI system. The transceiver unit 802 is configured to send the first information and the second information.

In a possible implementation, the second AI system belongs to the first AI system; and that the transceiver unit 802 is configured to send the first information and the second information includes: The transceiver unit 802 is configured to send the first information and the second information to a control node of the first AI system.

In a possible implementation, that the transceiver unit 802 is configured to send the first information and the second information includes: The transceiver unit 802 is configured to send the first information to a control node of the first AI system; and the transceiver unit 802 is configured to send the second information to a control node of the second AI system.

In a possible implementation, the AI configuration information of the first AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system; and/or
the AI configuration information of the second AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

In a possible implementation, the learning architecture includes federated learning, federated distillation, decentralized learning, meta learning, or split learning.

In a possible implementation, the first AI system or the second AI system is configured to: perform first processing on first data to obtain second data, and perform second processing on the second data.

When the learning architecture includes federated learning (or when the learning architecture is federated learning), the first data includes a parameter and/or a gradient of a global model, the first processing includes local training processing, the second data includes a parameter and/or a gradient of a local model, and the second processing includes aggregation processing.

When the learning architecture includes federated distillation (or when the learning architecture is federated distillation), the first data includes global logits, the first processing includes local training processing, the second data includes local logits, and the second processing includes aggregation processing.

When the learning architecture includes decentralized learning (or when the learning architecture is decentralized learning), the first data includes a parameter and/or a gradient of a first local model, the first processing includes aggregation processing and local training processing, the second data includes a parameter and/or a gradient of a second local model, and the second processing includes aggregation processing and local training processing.

When the learning architecture includes meta learning (or when the learning architecture is meta learning), the first data includes a parameter and/or a gradient of a meta model, the first processing includes support set training processing and test set gradient computation processing, the second data includes a test set gradient and/or loss, and the second processing includes gradient aggregation processing and meta model update processing.

When the learning architecture includes split learning (or when the learning architecture is split learning), the first data includes a split layer inference result, the first processing includes inference, gradient computation, reverse transfer, and parameter update processing, the second data includes a split layer gradient, and the second processing includes continuing gradient transfer processing and parameter update processing.

In a possible implementation, the first AI system and the second AI system are configured to perform a same AI task, or the first AI system and the second AI system are configured to perform different subtasks of a same AI task.

In a possible implementation, when the apparatus 800 is configured to perform the method performed by the second node in any one of the foregoing embodiments, the apparatus 800 includes a processing unit 801 and a transceiver unit 802. The transceiver unit 802 is configured to receive first information, where the first information indicates AI configuration information of a first artificial intelligence AI system, the first AI system and a second AI system belong to a same distributed learning system, the first AI system and the second AI system include at least one same node, and a learning architecture of the first AI system is different from a learning architecture of the second AI system. The processing unit 801 is configured to perform an AI task based on the AI configuration information of the first AI system.

In a possible implementation, the second AI system belongs to the first AI system; and the transceiver unit 802 is further configured to receive second information, where the second information indicates AI configuration information of the second AI system; and the transceiver unit 802 is further configured to send a part or all of the AI configuration information of the second AI system to a control node of the second AI system.

In a possible implementation, the AI configuration information of the first AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system; and/or
the AI configuration information of the second AI system includes at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

In a possible implementation, the learning architecture includes federated learning, federated distillation, decentralized learning, meta learning, or split learning.

In a possible implementation, the first AI system or the second AI system is configured to: perform first processing on first data to obtain second data, and perform second processing on the second data.

When the learning architecture includes federated learning (or when the learning architecture is federated learning), the first data includes a parameter and/or a gradient of a global model, the first processing includes local training processing, the second data includes a parameter and/or a gradient of a local model, and the second processing includes aggregation processing.

When the learning architecture includes federated distillation (or when the learning architecture is federated distillation), the first data includes global logits, the first processing includes local training processing, the second data includes local logits, and the second processing includes aggregation processing.

When the learning architecture includes decentralized learning (or when the learning architecture is decentralized learning), the first data includes a parameter and/or a gradient of a first local model, the first processing includes aggregation processing and local training processing, the second data includes a parameter and/or a gradient of a second local model, and the second processing includes aggregation processing and local training processing.

When the learning architecture includes meta learning (or when the learning architecture is meta learning), the first data includes a parameter and/or a gradient of a meta model, the first processing includes support set training processing and test set gradient computation processing, the second data includes a test set gradient and/or loss, and the second processing includes gradient aggregation processing and meta model update processing.

When the learning architecture includes split learning (or when the learning architecture is split learning), the first data includes a split layer inference result, the first processing includes inference, gradient computation, reverse transfer, and parameter update processing, the second data includes a split layer gradient, and the second processing includes continuing gradient transfer processing and parameter update processing.

In a possible implementation, the first AI system and the second AI system are configured to perform a same AI task, or the first AI system and the second AI system are configured to perform different subtasks of a same AI task.

It should be noted that, for details about content such as information execution processes of the units of the communication apparatus 800, reference may be made to the descriptions in the foregoing method embodiments of this application. Details are not described herein again.

FIG. 9 is another diagram of a structure of a communication apparatus 900 according to this application. The communication apparatus 900 includes at least an input/output interface 902. The communication apparatus 900 may be a chip or an integrated circuit.

Optionally, the communication apparatus further includes a logic circuit 901.

The transceiver unit 802 shown in FIG. 8 may be a communication interface. The communication interface may be the input/output interface 902 in FIG. 9, and the input/output interface 902 may include an input interface and an output interface. Alternatively, the communication interface may be a transceiver circuit, and the transceiver circuit may include an input interface circuit and an output interface circuit.

Optionally, the logic circuit 901 is configured to determine first information and second information, where the first information indicates AI configuration information of a first artificial intelligence AI system, the second information indicates AI configuration information of a second AI system, the first AI system and the second AI system belong to a same learning system, the first AI system and the second AI system include at least one same node, and a learning architecture of the first AI system is different from a learning architecture of the second AI system. The input/output interface 902 is configured to send the first information and the second information.

Optionally, the input/output interface 902 is configured to receive first information, where the first information indicates AI configuration information of a first artificial intelligence AI system, the first AI system and a second AI system belong to a same distributed learning system, the first AI system and the second AI system include at least one same node, and a learning architecture of the first AI system is different from a learning architecture of the second AI system. The logic circuit 901 is configured to perform an AI task based on the AI configuration information of the first AI system.

The logic circuit 901 and the input/output interface 902 may further perform other steps performed by the first node or the second node in any embodiment and implement corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus. A part or all of functions of the processing apparatus may be implemented by using software. The part or all of the functions of the processing apparatus may be implemented by using the software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), systems on chip (systems on chip, SoCs), central processing units (central processing units, CPUs), network processors (network processors, NPs), digital signal processing circuits (digital signal processors, DSPs), microcontroller units (microcontroller units, MCUs), programmable controllers (programmable logic devices, PLDs), other integrated chips, any combination of the foregoing chips or processors.

FIG. 10 shows a communication apparatus 1000 used in the foregoing embodiment provided in embodiments of this application. The communication apparatus 1000 may be specifically a communication apparatus serving as a terminal device in the foregoing embodiments. In the example shown in FIG. 10, the terminal device is implemented by using a terminal device (or a component in the terminal device).

In a diagram of a possible logical structure of the communication apparatus 1000, the communication apparatus 1000 may include but is not limited to at least one processor 1001 and a communication port 1002.

The transceiver unit 802 shown in FIG. 8 may be a communication interface. The communication interface may be the communication port 1002 in FIG. 10, and the communication port 1002 may include an input interface and an output interface. Alternatively, the communication port 1002 may be a transceiver circuit, and the transceiver circuit may include an input interface circuit and an output interface circuit.

Further, optionally, the apparatus may further include at least one of a memory 1003 and a bus 1004. In this embodiment of this application, the at least one processor 1001 is configured to control an action of the communication apparatus 1000.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor 1001 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. A person skilled in the art can clearly understand that, for a purpose of convenient and brief description, for detailed working processes of the foregoing system, apparatus, and unit, refer to corresponding processes in the foregoing method embodiments. Details are not described herein again.

It should be noted that the communication apparatus 1000 shown in FIG. 10 may be specifically configured to implement the steps implemented by using the terminal device in the foregoing method embodiments, and achieve the technical effects corresponding to the terminal device. For a specific implementation of the communication apparatus shown in FIG. 10, refer to the descriptions in the foregoing method embodiments. Details are not described herein again.

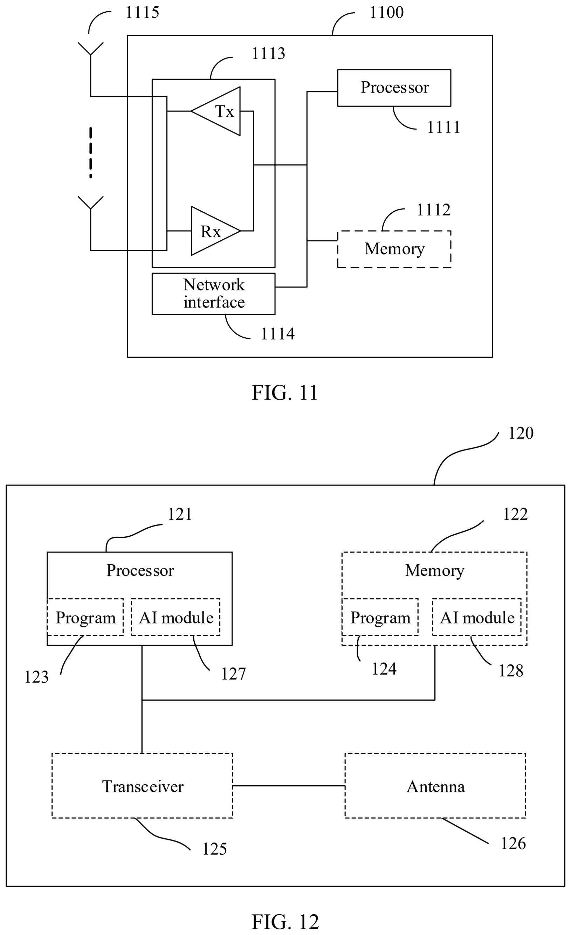

FIG. 11 is a diagram of a structure of a communication apparatus 1100 in the foregoing embodiment provided in embodiments of this application. The communication apparatus 1100 may be specifically the communication apparatus serving as the network device in the foregoing embodiments. In the example shown in FIG. 11, the network device is implemented by using a network device (or a component in the network device). For a structure of the communication apparatus, refer to the structure shown in FIG. 11.

The communication apparatus 1100 includes at least one processor 1111 and at least one network interface 1114. Further, optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In this embodiment of this application, the connection may include various interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 802 shown in FIG. 8 may be a communication interface. The communication interface may be the network interface 1114 in FIG. 11, and the network interface 1114 may include an input interface and an output interface. Alternatively, the network interface 1114 may be a transceiver circuit, and the transceiver circuit may include an input interface circuit and an output interface circuit.

The processor 1111 is mainly configured to process a communication protocol and communication data, control the entire communication apparatus, execute a software program, and process data of the software program, for example, is configured to support the communication apparatus in performing the action described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. A person skilled in the art can understand that the terminal device may include a plurality of baseband processors to adapt to different network standards, the terminal device may include a plurality of central processing units to improve a processing capability of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for performing the technical solutions in embodiments of this application, and execution of the program code is controlled by the processor 1111. Various types of executed computer program code may also be considered as drivers of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, namely, an on-chip storage element, or may be an independent storage element. This is not limited in this embodiment of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as digital signals.

The transceiver 1113 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitter, a transmitter device, a transmitter circuit, or the like.

It should be noted that the communication apparatus 1100 shown in FIG. 11 may be specifically configured to implement the steps implemented by using the network device in the foregoing method embodiments, and achieve the technical effects corresponding to the network device. For a specific implementation of the communication apparatus 1100 shown in FIG. 11, refer to the descriptions in the foregoing method embodiments. Details are not described herein again.

FIG. 12 is a diagram of a structure of a communication apparatus in the foregoing embodiment provided in embodiments of this application.

It may be understood that the communication apparatus 120 includes, for example, a module, a unit, an element, a circuit, or an interface, so as to be appropriately configured together to perform the technical solutions provided in this application. The communication apparatus 120 may be the RAN node, the terminal, the core network device, or another network device described above, or may be a component (for example, a chip) in the devices, to implement the methods described in the following method embodiments. The communication apparatus 120 includes one or more processors 121. The processor 121 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 121 may include a program 123 (which may also be referred to as code or instructions sometimes). The program 123 may be run on the processor 121, so that the communication apparatus 120 performs the method described in the following embodiments. In still another possible design, the communication apparatus 120 includes a circuit (not shown in FIG. 12), and the circuit is configured to implement the function of determining the first information and/or determining the second information in the foregoing embodiments.

Optionally, the communication apparatus 120 may include one or more memories 122, and a program 124 (which may also be referred to as code or instructions sometimes) is stored in the memory 122. The program 124 may be run on the processor 121, so that the communication apparatus 120 performs the method described in the foregoing method embodiments.

Optionally, the processor 121 and/or the memory 122 may include AI modules 1470 and 1480, and the AI module is configured to implement an AI-related function. The AI module may be implemented by using software, hardware, or a combination of software and hardware. For example, the AI module may include a radio intelligent control (radio intelligence control, RIC) module. For example, the AI module may be a near-real-time RIC or a non-real-time RIC.

Optionally, the processor 121 and/or the memory 122 may further store data. The processor and the memory may be separately disposed, or may be integrated together.

Optionally, the communication apparatus 120 may further include a transceiver 125 and/or an antenna 126. The processor 121 may also be sometimes referred to as a processing unit, and controls the communication apparatus (for example, the RAN node or the terminal). The transceiver 125 may also be referred to as a transceiver unit, a transceiver device, a transceiver circuit, a transceiver, or the like sometimes, and is configured to implement sending and receiving functions of the communication apparatus through the antenna 126.

The transceiver unit 802 shown in FIG. 8 may be a communication interface. The communication interface may be the transceiver 125 in FIG. 12, and the transceiver 125 may include an input interface and an output interface. Alternatively, the transceiver 125 may be a transceiver circuit, and the transceiver circuit may include an input interface circuit and an output interface circuit.

An embodiment of this application further provides a computer-readable storage medium. The storage medium stores one or more computer-executable instructions. When the computer-executable instructions are executed by a processor, the processor performs the method according to the possible implementation of the first node or the second node in the foregoing embodiments.

An embodiment of this application further provides a computer program product (or referred to as a computer program). When the computer program product is executed by a processor, the processor performs the method according to the possible implementation of the first node or the second node.

An embodiment of this application further provides a chip system. The chip system includes at least one processor, configured to support a communication apparatus in implementing the function in the foregoing possible implementation of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first node or the second node in the foregoing method embodiments.

An embodiment of this application further provides a communication system. An architecture of the network system includes the first node and the second node in any one of the foregoing embodiments. The first node may be a terminal device or a network device, and the second node may also be a terminal device or a network device.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or the part making a contribution, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes various media that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:

   determining first information and second information, wherein the first information indicates AI configuration information of a first artificial intelligence AI system, the second information indicates AI configuration information of a second AI system, the first AI system and the second AI system belong to a same learning system, the first AI system and the second AI system comprise at least one same node, and a learning architecture of the first AI system is different from a learning architecture of the second AI system; and
sending the first information and the second information.

2. The method according to claim 1, wherein the second AI system belongs to the first AI system, and the sending the first information and the second information comprises:
sending the first information and the second information to a control node of the first AI system.

3. The method according to claim 1, wherein the sending the first information and the second information comprises:

sending the first information to a control node of the first AI system; and
sending the second information to a control node of the second AI system.

4. The method according to any one of claims 1 to 3, wherein
the AI configuration information of the first AI system comprises at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system;
and/or
the AI configuration information of the second AI system comprises at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

5. The method according to any one of claims 1 to 4, wherein the learning architecture comprises:
federated learning, federated distillation, decentralized learning, meta learning, or split learning.

6. The method according to any one of claims 1 to 5, wherein the first AI system or the second AI system is configured to:
perform first processing on first data to obtain second data, and perform second processing on the second data; and

when the learning architecture comprises federated learning, the first data comprises a parameter and/or a gradient of a global model, the first processing comprises local training processing, the second data comprises a parameter and/or a gradient of a local model, and the second processing comprises aggregation processing;
when the learning architecture comprises federated distillation, the first data comprises global logits logits, the first processing comprises local training processing, the second data comprises local logits, and the second processing
when the learning architecture comprises decentralized learning, the first data comprises a parameter and/or a gradient of a first local model, the first processing comprises aggregation processing and local training processing, the second data comprises a parameter and/or a gradient of a second local model, and the second processing comprises aggregation processing and local training processing;
when the learning architecture comprises meta learning, the first data comprises a parameter and/or a gradient of a meta model, the first processing comprises support set training processing and test set gradient computation processing, the second data comprises a test set gradient and/or loss, and the second processing comprises gradient aggregation processing and meta model update processing; or
when the learning architecture comprises split learning, the first data comprises a split layer inference result, the first processing comprises inference, gradient computation, reverse transfer, and parameter update processing, the second data comprises a split layer gradient, and the second processing comprises continuing gradient transfer processing and parameter update processing.

7. The method according to any one of claims 1 to 6, wherein the first AI system and the second AI system are configured to perform a same AI task, or the first AI system and the second AI system are configured to perform different subtasks of a same AI task.

8. A communication method, comprising:

   receiving first information, wherein the first information indicates AI configuration information of a first artificial intelligence AI system, the first AI system and a second AI system belong to a same distributed learning system, the first AI system and the second AI system comprise at least one same node, and a learning architecture of the first AI system is different from a learning architecture of the second AI system; and
   performing an AI task based on the AI configuration information of the first AI system.

9. The method according to claim 8, wherein the second AI system belongs to the first AI system, and the method further comprises:

   receiving second information, wherein the second information indicates AI configuration information of the second AI system; and
   sending a part or all of the AI configuration information of the second AI system to a control node of the second AI system.

10. The method according to claim 9, wherein the AI configuration information of the second AI system comprises at least one of the following indication information:

    first indication information, indicating a node that participates in an AI task in the AI system;
    second indication information, indicating a role of a node that participates in an AI task in the AI system;
    third indication information, indicating the learning architecture of the AI system;
    fourth indication information, indicating an AI task of the AI system; or
    fifth indication information, indicating a communication resource of the AI system.

11. The method according to any one of claims 8 to 10, wherein the AI configuration information of the first AI system comprises at least one of the following indication information:

    first indication information, indicating a node that participates in an AI task in the AI system;
    second indication information, indicating a role of a node that participates in an AI task in the AI system;
    third indication information, indicating the learning architecture of the AI system;
    fourth indication information, indicating an AI task of the AI system; or
    fifth indication information, indicating a communication resource of the AI system.

12. The method according to any one of claims 8 to 11, wherein the learning architecture comprises:
    federated learning, federated distillation, decentralized learning, meta learning, or split learning.

13. The method according to any one of claims 8 to 12, wherein the first AI system or the second AI system is configured to:
    perform first processing on first data to obtain second data, and perform second processing on the second data; and

    when the learning architecture comprises federated learning, the first data comprises a parameter and/or a gradient of a global model, the first processing comprises local training processing, the second data comprises a parameter and/or a gradient of a local model, and the second processing comprises aggregation processing;
    when the learning architecture comprises federated distillation, the first data comprises global logits logits, the first processing comprises local training processing, the second data comprises local logits, and the second processing comprises aggregation processing;
    when the learning architecture comprises decentralized learning, the first data comprises a parameter and/or a gradient of a first local model, the first processing comprises aggregation processing and local training processing, the second data comprises a parameter and/or a gradient of a second local model, and the second processing comprises aggregation processing and local training processing;
    when the learning architecture comprises meta learning, the first data comprises a parameter and/or a gradient of a meta model, the first processing comprises support set training processing and test set gradient computation processing, the second data comprises a test set gradient and/or loss, and the second processing comprises gradient aggregation processing and meta model update processing; or
    when the learning architecture comprises split learning, the first data comprises a split layer inference result, the first processing comprises inference, gradient computation, reverse transfer, and parameter update processing, the second data comprises a split layer gradient, and the second processing comprises continuing gradient transfer processing and parameter update processing.

14. The method according to any one of claims 8 to 13, wherein the first AI system and the second AI system are configured to perform a same AI task, or the first AI system and the second AI system are configured to perform different subtasks of a same AI task.

15. A communication apparatus, comprising a processing unit and a transceiver unit, wherein

the processing unit is configured to determine first information and second information, wherein the first information indicates AI configuration information of a first artificial intelligence AI system, the second information indicates AI configuration information of a second AI system, the first AI system and the second AI system belong to a same learning system, the first AI system and the second AI system comprise at least one same node, and a learning architecture of the first AI system is different from a learning architecture of the second AI system; and the transceiver unit is configured to send the first information and the second information.

16. The apparatus according to claim 15, wherein the second AI system belongs to the first AI system, and that the transceiver unit is configured to send the first information and the second information comprises:
the transceiver unit is configured to send the first information and the second information to a control node of the first AI system.

17. The apparatus according to claim 15, wherein that the transceiver unit is configured to send the first information and the second information comprises:

the transceiver unit is configured to send the first information to a control node of the first AI system; and
the transceiver unit is configured to send the second information to a control node of the second AI system.

18. The apparatus according to any one of claims 15 to 17, wherein
the AI configuration information of the first AI system comprises at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system;
the AI configuration information of the second AI system comprises at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

19. The apparatus according to any one of claims 15 to 18, wherein the learning architecture comprises:
federated learning, federated distillation, decentralized learning, meta learning, or split learning.

20. The apparatus according to any one of claims 15 to 19, wherein the first AI system or the second AI system is configured to: perform first processing on first data to obtain second data, and perform second processing on the second data; and

when the learning architecture comprises federated learning, the first data comprises a parameter and/or a gradient of a global model, the first processing comprises local training processing, the second data comprises a parameter and/or a gradient of a local model, and the second processing comprises aggregation processing;
when the learning architecture comprises federated distillation, the first data comprises global logits logits, the first processing comprises local training processing, the second data comprises local logits, and the second processing comprises aggregation processing;
when the learning architecture comprises decentralized learning, the first data comprises a parameter and/or a gradient of a first local model, the first processing comprises aggregation processing and local training processing, the second data comprises a parameter and/or a gradient of a second local model, and the second processing comprises aggregation processing and local training processing;

when the learning architecture comprises meta learning, the first data comprises a parameter and/or a gradient of a meta model, the first processing comprises support set training processing and test set gradient computation processing, the second data comprises a test set gradient and/or loss, and the second processing comprises gradient aggregation processing and meta model update processing; or

when the learning architecture comprises split learning, the first data comprises a split layer inference result, the first processing comprises inference, gradient computation, reverse transfer, and parameter update processing, the second data comprises a split layer gradient, and the second processing comprises continuing gradient transfer processing and parameter update processing.

21. The apparatus according to any one of claims 15 to 20, wherein the first AI system and the second AI system are configured to perform a same AI task, or the first AI system and the second AI system are configured to perform different subtasks of a same AI task.

22. A communication apparatus, comprising a processing unit and a transceiver unit, wherein

the transceiver unit is configured to receive first information, wherein the first information indicates AI configuration information of a first artificial intelligence AI system, the first AI system and a second AI system belong to a same distributed learning system, the first AI system and the second AI system comprise at least one same node, and a learning architecture of the first AI system is different from a learning architecture of the second AI system; and

the processing unit is configured to perform an AI task based on the AI configuration information of the first AI system.

23. The apparatus according to claim 22, wherein the second AI system belongs to the first AI system;

the transceiver unit is further configured to receive second information, wherein the second information indicates AI configuration information of the second AI system; and

the transceiver unit is further configured to send a part or all of the AI configuration information of the second AI system to a control node of the second AI system.

24. The apparatus according to claim 23, wherein the AI configuration information of the second AI system comprises at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

25. The apparatus according to any one of claims 22 to 24, wherein the AI configuration information of the first AI system comprises at least one of the following indication information:

first indication information, indicating a node that participates in an AI task in the AI system;
second indication information, indicating a role of a node that participates in an AI task in the AI system;
third indication information, indicating the learning architecture of the AI system;
fourth indication information, indicating an AI task of the AI system; or
fifth indication information, indicating a communication resource of the AI system.

26. The apparatus according to any one of claims 22 to 25, wherein the learning architecture comprises:
federated learning, federated distillation, decentralized learning, meta learning, or split learning.

27. The apparatus according to any one of claims 22 to 26, wherein the first AI system or the second AI system is configured to: perform first processing on first data to obtain second data, and perform second processing on the second data; and

when the learning architecture comprises federated learning, the first data comprises a parameter and/or a gradient of a global model, the first processing comprises local training processing, the second data comprises a parameter and/or a gradient of a local model, and the second processing comprises aggregation processing;

when the learning architecture comprises federated distillation, the first data comprises global logits logits, the first processing comprises local training processing, the second data comprises local logits, and the second processing comprises aggregation processing;

when the learning architecture comprises decentralized learning, the first data comprises a parameter and/or a gradient of a first local model, the first processing comprises aggregation processing and local training processing, the second data comprises a parameter and/or a gradient of a second local model, and the second processing comprises aggregation processing and local training processing;

when the learning architecture comprises meta learning, the first data comprises a parameter and/or a gradient of a meta model, the first processing comprises support set training processing and test set gradient computation processing, the second data comprises a test set gradient and/or loss, and the second processing comprises gradient aggregation processing and meta model update processing; or

when the learning architecture comprises split learning, the first data comprises a split layer inference result, the first processing comprises inference, gradient computation, reverse transfer, and parameter update processing, the second data comprises a split layer gradient, and the second processing comprises continuing gradient transfer processing and parameter update processing.

28. The apparatus according to any one of claims 22 to 27, wherein the first AI system and the second AI system are configured to perform a same AI task, or the first AI system and the second AI system are configured to perform different subtasks of a same AI task.

29. A communication apparatus, comprising at least one processor, configured to execute a computer program or instructions in a memory, to implement the method according to any one of claims 1 to 7.

30. A communication apparatus, comprising at least one processor, configured to execute a computer program or instructions in a memory, to implement the method according to any one of claims 8 to 14.

31. A communication system, wherein the system comprises the communication apparatus according to any one of claims 15 to 21, and the communication apparatus according to any one of claims 22 to 28; or

the system comprises the communication apparatus according to claim 29 and the communication apparatus according to claim 30.

32. A computer-readable storage medium, wherein the medium stores instructions; and when the instructions are executed by a computer, the method according to any one of claims 1 to 14 is implemented.

33. A computer program product, comprising instructions, wherein when the instructions are run on a computer, the computer is caused to perform the method according to any one of claims 1 to 14.

FIG. 1a

FIG. 1b

Television

Mobile
phone

FIG. 1c

$w_0 x_0$

$w_1 x_1$

Neuron

$y = f\left(\sum_{i=0}^{n} w_i x_i + b\right)$

$y$

$w_n x_n$

FIG. 1d

FIG. 1e

FIG. 2a

FIG. 2b

FIG. 2c

FIG. 2d

FIG. 2e

FIG. 2f

FIG. 2g

AI system 1

1

2

3

4

5

6

7

8

9

AI system 3

AI system 2

AI system 4

FIG. 3a

Control
node

AI system 1

1

2

3

4

5

6

7

8

9

AI system 3

AI system 2

AI system 4

FIG. 3b

FIG. 3c

FIG. 4

```
┌────────────┐          ┌──────────┐          ┌────────────┐
│ First node │          │  Second  │          │ Third node │
│            │          │   node   │          │            │
└─────┬──────┘          └────┬─────┘          └──────┬─────┘
      │                      │                       │
```

S501: First information, where
the first information indicates
AI configuration information
of a first AI system

S502: Second information,
where the second information
indicates AI configuration
information of a second AI
system

S503: Part or all of the AI
configuration information
of the second AI system

| S504: Perform an AI task based on the AI configuration information of the first AI system | S505: Perform an AI task based on the part or all of the AI configuration information of the second AI system |

FIG. 5

```
┌────────────┐          ┌──────────┐          ┌────────────┐
│ First node │          │  Second  │          │ Third node │
│            │          │   node   │          │            │
└─────┬──────┘          └────┬─────┘          └──────┬─────┘
      │                      │                       │
```

S601: First information,
where the first information
indicates AI configuration
information of a first AI
system

S602: Second information, where the second information
indicates AI configuration information of a second AI system

| S603: Perform an AI task based on the AI configuration information of the first AI system | S604: Perform an AI task based on the AI configuration information of the second AI system |

FIG. 6

```
  First                    Second                    Third
  node                     node                      node
    │                        │                         │
    │                        │◄────────────────────────│
    │                        │   S701: First data      │
    │                        │   (second AI system)    │
    │                 ┌──────┴────────────────┐        │
    │                 │ S702: First processing│        │
    │                 │ (second AI system)    │        │
    │                 └──────┬────────────────┘        │
    │◄───────────────────────│                         │
    │  S703: First data      │                         │
    │  (first AI system)     │                         │
    │                        │                         │
┌───┴──────────────────┐     │                         │
│ S704: First processing│     │                         │
│ (first AI system)    │     │                         │
└───┬──────────────────┘     │                         │
    │                        │                         │
    │───────────────────────►│                         │
    │  S705: Second data     │                         │
    │  (first AI system)     │                         │
    │               ┌────────┴──────┐                  │
    │               │ S706: Second  │                  │
    │               │ processing    │                  │
    │               │ (first AI     │                  │
    │               │ system)       │                  │
    │               └────────┬──────┘                  │
    │                        │                         │
    │                        │────────────────────────►│
    │                        │  S707: Second data       │
    │                        │  (second AI system)      │
    │                        │                ┌─────────┴──────┐
    │                        │                │ S708: Second   │
    │                        │                │ processing     │
    │                        │                │ (second AI     │
    │                        │                │ system)        │
    │                        │                └─────────┬──────┘
    │                        │                         │
```

FIG. 7a

FIG. 7b

800

Communication apparatus

801

Processing
unit

802

Transceiver
unit

FIG. 8

900

Communication apparatus

901

Logic circuit

902

Input/Output
interface

FIG. 9

1000

Communication apparatus

1002

Communication
port

1001

Processor

1004

1003

Memory

FIG. 10

FIG. 11

FIG. 12

## INTERNATIONAL SEARCH REPORT

| International application No. |
| --- |
| **PCT/CN2023/108666** |

| | |
| --- | --- |
| **A.** | **CLASSIFICATION OF SUBJECT MATTER** |
| | H04W24/02(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

    IPC:H04W,H04L

Documentation searched other than minimum documentation to the extent that such documents are included in the fields searched

Electronic data base consulted during the international search (name of data base and, where practicable, search terms used)

    CNABS, CNTXT, CNKI, VEN, DWPI, ENTXT, 3GPP, IEEE: 人工智能, 指示, 配置, 架构, 不同, 节点, 联邦, 去中心式, 元学习, 分割学习, AI, indication, configuration, architecture, different, node, federated, decentralized, meta, segmentation, learning

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | CN 116419257 A (HUAWEI TECHNOLOGIES CO., LTD.) 11 July 2023 (2023-07-11) description, paragraphs 0134-0135 | 1-33 |
| A | CN 112199385 A (BEIJING BAIDU NETCOM SCIENCE AND TECHNOLOGY CO., LTD.) 08 January 2021 (2021-01-08) entire document | 1-33 |
| A | CN 113296905 A (ALIBABA SINGAPORE HOLDINGS LIMITED) 24 August 2021 (2021-08-24) entire document | 1-33 |
| A | CN 115314915 A (SPREADTRUM COMMUNICATIONS (SHANGHAI) CO., LTD.) 08 November 2022 (2022-11-08) entire document | 1-33 |
| A | CN 115904692 A (INTEL CORP.) 04 April 2023 (2023-04-04) entire document | 1-33 |
| A | US 2021326701 A1 (QUALCOMM INC.) 21 October 2021 (2021-10-21) entire document | 1-33 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 March 2024** | **27 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/108666** |

**C.    DOCUMENTS CONSIDERED TO BE RELEVANT**

| Category* | Citation of document, with indication, where appropriate, of the relevant passages | Relevant to claim No. |
|---|---|---|
| A | 庞涛等 (PANG, Tao et al.). "手机终端人工智能关键技术研究 (Research on Artificial Intelligence Key Technologies of Mobile Terminal)" <br> 电信科学 (Telecommunications Science), No. 5, 31 May 2020 (2020-05-31), entire document | 1-33 |

Form PCT/ISA/210 (second sheet) (July 2022)

**INTERNATIONAL SEARCH REPORT**
Information on patent family members

International application No.

**PCT/CN2023/108666**

| Patent document cited in search report | | | Publication date (day/month/year) | Patent family member(s) | | | Publication date (day/month/year) |
|---|---|---|---|---|---|---|---|
| CN | 116419257 | A | 11 July 2023 | WO | 2023125660 | A1 | 06 July 2023 |
| CN | 112199385 | A | 08 January 2021 | | None | | |
| CN | 113296905 | A | 24 August 2021 | HK | 40057083 | A0 | 08 April 2022 |
| CN | 115314915 | A | 08 November 2022 | WO | 2022233294 | A1 | 10 November 2022 |
| CN | 115904692 | A | 04 April 2023 | EP | 4134821 | A1 | 15 February 2023 |
| | | | | US | 2022114495 | A1 | 14 April 2022 |
| | | | | IN | 202244039794 | A | 10 February 2023 |
| US | 2021326701 | A1 | 21 October 2021 | EP | 4136910 | A1 | 22 February 2023 |
| | | | | WO | 2021211282 | A1 | 21 October 2021 |
| | | | | CN | 115399032 | A | 25 November 2022 |
| | | | | IN | 202227047832 | A | 28 October 2022 |

Form PCT/ISA/210 (patent family annex) (July 2022)